# EUROPEAN PATENT APPLICATION

(11) **EP 3 388 982 A1**
(43) Date of publication of application: **17.10.2018**
(21) Application number: 16873122.2
(22) Date of filing: 09.12.2016
(51) Int. Cl.: G06Q 10/00, F24F 11/02

(54) **INFORMATION PROCESSING APPARATUS**

(30) Priority: 11.12.2015 JP 2015241792
(71) Applicant: Daikin Industries, Ltd., Osaka-shi, Osaka 530-8323 (JP)
(72) Inventor: YAMANAMI, Akihisa, Osaka-shi Osaka 530-8323 (JP); SUZUKI, Toshihiro, Osaka-shi Osaka 530-8323 (JP); FUKUSHIMA, Takamasa, Osaka-shi Osaka 530-8323 (JP)
(74) Representative: Goddar, Heinz J.
(86) International application number: PCT/JP2016/086765
(87) International publication number: WO 2017/099229

(57) **Abstract**

An information storage unit (11) stores a refrigeration apparatus (20) in association with operation condition information about operation conditions of the refrigeration apparatus (20), and an information terminal (22) of a user (21) or an information terminal (32) of a shop (30), the user (21) or the shop (30) being in charge of a regular inspection of the refrigeration apparatus (20). An information processing unit (12) generates regular inspection information to be used for the regular inspection of the refrigeration apparatus (20) based on the operation condition information associated with the refrigeration apparatus (20) in the information storage unit (11), the regular inspection information including items related to the operation conditions of the refrigeration apparatus (20), and sends the regular inspection information to the user's information terminal (22) or the shop's information terminal (32) which is associated with the refrigeration apparatus (20) in the information storage unit (11).

## Description

### TECHNICAL FIELD

The present disclosure relates to an information processing apparatus, particularly relates to assistance of an inspection of a refrigeration apparatus.

### BACKGROUND ART

A refrigeration apparatus that circulates a refrigerant to perform a refrigeration cycle (e.g., an air conditioner, a freezer, and a refrigerator) has been known. The refrigeration apparatus of this type is inspected on a regular basis for safe operation thereof. For example, Patent Document 1 discloses that a serviceman (inspector) operates an air conditioner (a refrigeration apparatus) at the site for inspection.

The Act on Rational Use and Proper Management of Fluorocarbons (CFC Emission Control Act for short) that came into effect on April 1, 2015 obliges particular refrigeration apparatuses to receive a regular inspection by a qualified person. The regular inspection by the qualified person includes visual check items, and check items related to operation conditions of the refrigeration apparatus (e.g., low pressure and high pressure). In this way, the regular inspection of the refrigeration apparatus has been carried out in view of not only the safe operation of the apparatus, but also environmental protection.

### CITATION LIST

### PATENT DOCUMENTS

[Patent Document 1] Japanese Unexamined Patent Publication No. H11-248286

### SUMMARY OF THE INVENTION

### TECHNICAL PROBLEM

If the regular inspection includes the check items related to the operation conditions of the refrigeration apparatus (e.g., low pressure and high pressure) as described above, an inspector measures the operation conditions of the refrigeration apparatus at the site to obtain information about the operation conditions of the refrigeration apparatus. In such a situation, it has been difficult to reduce burdens on the inspector of the refrigeration apparatus.

In view of the foregoing background, it is therefore an object of the present disclosure to provide an information processing apparatus which can reduce the burdens on the inspector of the refrigeration apparatus.

### SOLUTION TO THE PROBLEM

A first aspect of the present disclosure is directed to an information processing apparatus connected, via a telecommunications network (40), to an information terminal (22) handled by a user (21) of a refrigeration apparatus (20) subject to a regular inspection by a qualified person, and an information terminal (32) handled by an employee of a shop (30) having an inspector (31) as the qualified person and being capable of offering regular inspection service of the refrigeration apparatus (20). The information processing apparatus includes: an information storage unit (11) which stores the refrigeration apparatus (20) in association with operation condition information about operation conditions of the refrigeration apparatus (20), and the information terminal (22) of the user (21), or the information terminal (32) of the shop (30), the user (21) or the shop (30) being in charge of the regular inspection of the refrigeration apparatus (20); and an information processing unit (12) which generates regular inspection information to be used for the regular inspection of the refrigeration apparatus (20) based on the operation condition information associated with the refrigeration apparatus (20) in the information storage unit (11), the regular inspection information including items related to the operation conditions of the refrigeration apparatus (20), and sends the regular inspection information to the information terminal (22) of the user (21) or the information terminal (32) of the shop (30), the user (21) or the shop (30) being in charge of the regular inspection of the refrigeration apparatus (20), and the user's information terminal (22) or the shop's information terminal (22) being associated with the refrigeration apparatus (20) in the information storage unit (11).

According to the first aspect, the inspector in charge of the regular inspection of the refrigeration apparatus (20), i.e., the user (21) or the shop (30), can be provided with the regular inspection information (information to be used for the regular inspection of the refrigeration apparatus (20) and including items related to the operation conditions of the refrigeration apparatus (20)). This can assist the inspector in charge of the regular inspection of the refrigeration apparatus (20) to obtain the regular inspection information. That is, the inspector in charge of the regular inspection no longer needs to perform measurement of the refrigeration apparatus (20) (measurement to obtain the regular inspection information).

A second aspect of the present disclosure is an embodiment of the first aspect. In the second aspect, receiving a request to send the regular inspection information from the information terminal (22) of the user (21) or the information terminal (32) of the shop (30), the information processing unit (12) sends, to the information terminal (22, 32), the regular inspection information which has been generated based on the operation condition information of the refrigeration apparatus (20) associated with the information terminal (22, 32) in the information storage unit (11).

According to the second aspect, upon request from the inspector in charge of the regular inspection of the refrigeration apparatus (20), i.e., the user (21) or the shop (30), the regular inspection information of the refrigeration apparatus (20) can be provided for the inspector in charge of the regular inspection of the refrigeration apparatus (20).

A third aspect of the present disclosure is an embodiment of the first or second aspect. In the third aspect, when time to notify of the regular inspection, which is predetermined for the refrigeration apparatus (20), has come, the information processing unit (12) sends the regular inspection information, which has been generated based on the operation condition information associated with the refrigeration apparatus (20) in the information storage unit (11), to the information terminal (22) of the user (21) or the information terminal (32) of the shop (30), the user (21) or the shop (30) being in charge of the regular inspection of the refrigeration apparatus (20), and the user's information terminal (22) or the shop's information terminal (23) being associated with the refrigeration apparatus (20) in the information storage unit (11).

According to the third aspect, the regular inspection information of the refrigeration apparatus (20) can be automatically provided for the inspector in charge of the regular inspection of the refrigeration apparatus (20). Thus, the inspector in charge of the regular inspection of the refrigeration apparatus (20) no longer needs to send a request to send the regular inspection information.

A fourth aspect of the present disclosure is an embodiment of any one of the first to third aspects. In the fourth aspect, the information processing unit (12) generates the regular inspection information based on the operation condition information which is associated with the refrigeration apparatus (20) in the information storage unit (11) and obtained in a high-load period of year in which the refrigeration apparatus (20) is presumably under a relatively high load.

According to the fourth aspect, the refrigeration apparatus (20) tends to operate at a relatively high capacity in a period when it is presumably under a relatively high load (in a high-load period, e.g., in summer), while the refrigeration apparatus (20) tends to operate at a relatively low capacity in a period when it is presumably under a relatively low load (in a low-load period, e.g., in a moderate season). That is, the operation condition information of the refrigeration apparatus (20) obtained in the high-load period is probably that of the active refrigeration apparatus (20). Thus, if the regular inspection information is generated based on the operation condition information which is associated with the refrigeration apparatus (20) and obtained in the high-load period, the accuracy of the items related to the operation conditions of the refrigeration apparatus (20) included in the regular inspection information can be improved. This can improve the accuracy of the regular inspection of the refrigeration apparatus (20) by the inspector in charge of the regular inspection of the refrigeration apparatus (20).

A fifth aspect of the present disclosure is an embodiment of any one of the first to fourth aspects. In the fifth aspect, in addition to the sending of the regular inspection information about the refrigeration apparatus (20), the information processing unit (12) notifies the information terminal (22) of the user (21) or the information terminal (32) of the shop (30) of recommended time for the regular inspection, which is time when the regular inspection of the refrigeration apparatus (20) is recommended and predetermined for the refrigeration apparatus (20), the user (21) or the shop (30) being in charge of the regular inspection of the refrigeration apparatus (20), and the user's information terminal (22) or the shop's information terminal (32) being associated with the refrigeration apparatus (20) in the information storage unit (11).

According to the fifth aspect, the inspector in charge of the regular inspection of the refrigeration apparatus (20) can be notified of the recommended time for the regular inspection of the refrigeration apparatus (20). This can assist time management of the regular inspection by the inspector in charge of the regular inspection of the refrigeration apparatus (20). That is, the inspector in charge of the regular inspection of the refrigeration apparatus (20) no longer needs to do the time management of the regular inspection.

A sixth aspect of the disclosure is an embodiment of the fifth aspect. In the sixth aspect, the recommended time for the regular inspection is determined based on a status of use of the refrigeration apparatus (20).

According to the sixth aspect, the recommended time for the regular inspection can be determined in accordance with the status of use of the refrigeration apparatus (20).

A seventh aspect of the present disclosure is an embodiment of any one the first to sixth aspects. In the seventh aspect, the refrigeration apparatus (20) is subject to the regular inspection and a simple inspection by the user (21), the information storage unit (11) stores, in association with the refrigeration apparatus (20), the information terminal (22) of the user (21) in charge of the simple inspection of the refrigeration apparatus (20), and when time to notify of the simple inspection, which is predetermined for the refrigeration apparatus (20), has come, the information processing unit (12) notifies the information terminal (22) of recommended time for the simple inspection, which is time when the simple inspection of the refrigeration apparatus (20) is recommended and predetermined for the refrigeration apparatus (20), the information terminal (22) being handled by the user (21) in charge of the simple inspection of the refrigeration apparatus (20) and associated with the refrigeration apparatus (20) in the information storage unit (11).

According to the seventh aspect, notification of the recommended time for the simple inspection of the refrigeration apparatus (20) can be automatically provided for the inspector in charge of the simple inspection of the refrigeration apparatus (20) (user (21)). This can assist time management of the simple inspection by the inspector in charge of the simple inspection of the refrigeration apparatus (20). That is, the inspector in charge of the simple inspection of the refrigeration apparatus (20) no longer needs to do the time management of the simple inspection.

An eighth aspect of the present disclosure is an embodiment of the seventh aspect. In the eighth aspect, in addition to the notification of the recommended time for the simple inspection of the refrigeration apparatus (20), the information processing unit (12) notifies the information terminal (22) of the recommended time for the regular inspection, which is time when the regular inspection of the refrigeration apparatus (20) is recommended and predetermined for the refrigeration apparatus (20), the information terminal (22) being handled by the user (21) in charge of the simple inspection of the refrigeration apparatus (20) and associated with the refrigeration apparatus (20) in the information storage unit (11).

According to the eighth aspect, the inspector in charge of the simple inspection of the refrigeration apparatus (20) can be notified of both of the recommended time for the simple inspection and recommended time for the regular inspection of the refrigeration apparatus (20). Thus, the user (21), who is the inspector in charge of the simple inspection of the refrigeration apparatus (20), can plan the inspection of the refrigeration apparatus (20) based on both of the recommended time for the simple inspection and recommended time for the regular inspection of the refrigeration apparatus (20). As a result, the regular and simple inspections of the refrigeration apparatus (20) can be performed efficiently.

A ninth aspect of the present disclosure is an embodiment of the seventh or eighth aspect. In the ninth aspect, in addition to the notification of the recommended time for the simple inspection of the refrigeration apparatus (20), the information processing unit (12) sends a simple inspection check sheet to be used for the simple inspection of the refrigeration apparatus (20) to the information terminal (22) which is handled by the user (21) in charge of the simple inspection of the refrigeration apparatus (20) and associated with the refrigeration apparatus (20) in the information storage unit (11).

According to the ninth aspect, the simple inspection check sheet of the refrigeration apparatus (20) can be provided for the inspector in charge of the simple inspection of the refrigeration apparatus (20). This can assist the inspector in charge of the simple inspection of the refrigeration apparatus (20) to prepare the simple inspection check sheet. That is, the inspector in charge of the simple inspection of the refrigeration apparatus (20) no longer needs to prepare the simple inspection check sheet. As a result, the burdens on the inspector in charge of the simple inspection of the refrigeration apparatus (20) can be reduced.

### ADVANTAGES OF THE INVENTION

According to the first aspect of the disclosure, the inspector in charge of the regular inspection of the refrigeration apparatus (20) can obtain the regular inspection information with assistance. This can reduce the burdens on the inspector in charge of the regular inspection of the refrigeration apparatus (20).

According to the second aspect of the disclosure, upon request from the inspector in charge of the regular inspection of the refrigeration apparatus (20), i.e., the user (21) or the shop (30), the regular inspection information of the refrigeration apparatus (20) can be provided for the inspector in charge of the regular inspection of the refrigeration apparatus (20). Thus, the regular inspection information can be provided for the inspector in charge of the regular inspection of the refrigeration apparatus (20) at suitable timing (when the inspector requires the regular inspection information of the refrigeration apparatus (20)).

According to the third aspect of the disclosure, the inspector in charge of the regular inspection of the refrigeration apparatus (20) no longer needs to send the request to send the regular inspection information. This can reduce the burdens on the inspector in charge of the regular inspection of the refrigeration apparatus (20).

According to the fourth aspect of the disclosure, the accuracy of the items related to the operation conditions of the refrigeration apparatus (20) included in the regular inspection information can be improved. This can improve the accuracy of the regular inspection of the refrigeration apparatus (20) by the inspector in charge of the regular inspection of the refrigeration apparatus (20).

According to the fifth aspect of the disclosure, the inspector in charge of the regular inspection of the refrigeration apparatus (20) can obtain the regular inspection information with assistance. This can reduce the burdens on the inspector in charge of the regular inspection of the refrigeration apparatus (20).

According to the sixth aspect of the disclosure, the recommended time for the regular inspection can be determined in accordance with the status of use of the refrigeration apparatus (20). Thus, the regular inspection of the refrigeration apparatus (20) can be performed at suitable timing in view of the status of use of the refrigeration apparatus (20).

According to the seventh aspect of the disclosure, the inspector in charge of the simple inspection of the refrigeration apparatus (20) can perform time management of the simple inspection with assistance. This can reduce the burdens on the inspector in charge of the simple inspection of the refrigeration apparatus (20).

According to the eighth aspect of the disclosure, the user (21), who is the inspector in charge of the simple inspection of the refrigeration apparatus (20), can plan the inspection of the refrigeration apparatus (20) based on both of the recommended time for the simple inspection and recommended time for the regular inspection of the refrigeration apparatus (20). Thus, the regular and simple inspections of the refrigeration apparatus (20) can be performed efficiently.

According to the ninth aspect of the disclosure, the inspector in charge of the simple inspection of the refrigeration apparatus (20) can prepare the simple inspection check sheet with assistance. This can reduce the burdens on the inspector in charge of the simple inspection of the refrigeration apparatus (20).

### BRIEF DESCRIPTION OF THE DRAWINGS

[FIG. 1] FIG. 1 is a conceptual diagram illustrating an exemplary configuration of an information processing apparatus according to an embodiment.
[FIG. 2] FIG. 2 illustrates an example of an appliance management table.
[FIG. 3] FIG. 3 illustrates an example of an operation condition management table.
[FIG. 4] FIG. 4 illustrates an example of an inspector-in-charge management table.
[FIG. 5] FIG. 5 illustrates an example of a time management table.
[FIG. 6] FIG. 6 illustrates an example of a regular inspection check sheet.
[FIG. 7] FIG. 7 illustrates an example of a simple inspection check sheet.
[FIG. 8] FIG. 8 illustrates an example of a regular inspection management table.
[FIG. 9] FIG. 9 illustrates an example of a simple inspection management table.
[FIG. 10] FIG. 10 is a flow diagram illustrating a pre-regular inspection process.
[FIG. 11] FIG. 11 is a conceptual diagram illustrating how a regular inspection check sheet is processed.
[FIG. 12] FIG. 12 is a flow diagram illustrating a post-regular inspection process.
[FIG. 13] FIG. 13 is a flow diagram illustrating a pre-simple inspection process.
[FIG. 14] FIG. 14 is a conceptual diagram illustrating how a simple inspection check sheet is processed.
[FIG. 15] FIG. 15 is a flow diagram illustrating a post-simple inspection process.
[FIG. 16] FIG. 16 illustrates an example of an appliance information table.
[FIG. 17] FIG. 17 illustrates an example of a manager registration form.
[FIG. 18] FIG. 18 illustrates an example of an appliance registration form.
[FIG. 19] FIG. 19 is a flow diagram illustrating an information registration process.
[FIG. 20] FIG. 20 illustrates an example of a simple inspection status confirmation sheet.
[FIG. 21] FIG. 21 is a flow diagram illustrating a simple inspection status confirmation process.

### DESCRIPTION OF EMBODIMENTS

Embodiments will now be described in detail with reference to the drawings. Note that like reference characters denote the same or equivalent components in the drawings, and the description thereof will not be repeated.

### (Information Processing Apparatus)

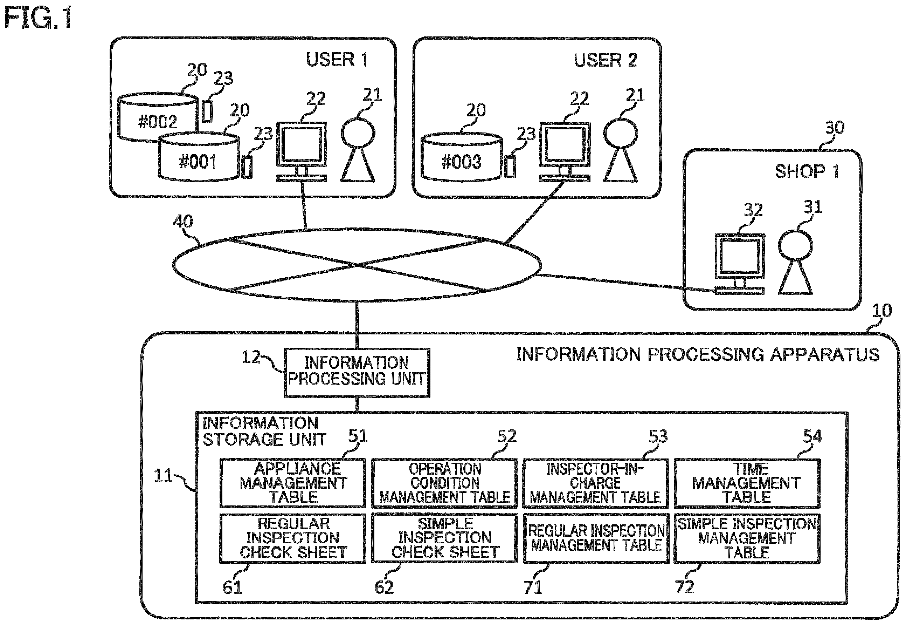

FIG. 1 shows an exemplary configuration of an information processing apparatus (10) according to an embodiment. The information processing apparatus (10) is connected to, via a telecommunications network (40), an information terminal (22) handled by a user (21) of a refrigeration apparatus (20), and an information terminal (32) handled by an employee of a shop (30) so as to assist an inspection of the refrigeration apparatus (20) by the user (21) or the shop (30). The information processing apparatus (10) includes an information storage unit (11) and an information processing unit (12).

### [Refrigeration Apparatus]

The refrigeration apparatus (20) allows a refrigerant to circulate to perform a refrigeration cycle. Specifically, the refrigeration apparatus (20) may be, for example, an air conditioning appliance (an air conditioner) which controls the temperature in a room, and a refrigeration/cold storage appliance (e.g., a freezer and a refrigerator) which controls the temperature in a storage.

In this example, the refrigeration apparatus (20) is a Class-I specified product (a refrigeration apparatus filled with fluorocarbons as a refrigerant) which is subject to a simple inspection by the user (21) and a regular inspection by a qualified person (e.g., a technician who handles a fluorocarbon refrigerant) under the Act on Rational Use and Proper Management of Fluorocarbons (CFC Emission Control Act for short). The simple inspection by the user (21) mainly includes visual check items. The regular inspection by the qualified person includes visual check items, and check items related to operation conditions of the refrigeration apparatus (20) (e.g., low pressure and high pressure).

The CFC Emission Control Act specifies the cycle (frequency) of the regular inspection of some of the Class-I specified products subject to the regular inspection by the qualified person in accordance with their motor ratings. Specifically, air conditioning appliances with the motor rating of 7.5 kW or higher and less than 50 kW are required to receive the regular inspection at least one time every three years. Air conditioning appliances with the motor rating of 50 kW or higher and refrigeration/cold storage appliances with the motor rating of 7.5 kW or higher are required to receive the regular inspection at least one time every year. The CFC Emission Control Act also requires every Class-I specified product to receive the simple inspection at least one time every three months.

In the following description, the refrigeration apparatus (20) is a Class-I specified product which is subject to the regular inspection performed at least one time every three years, and the simple inspection performed at least one time every three months, for convenience sake. That is, the cycle of the regular inspection of the refrigeration apparatus (20) is set to be "three years," and the cycle of the simple inspection of the refrigeration apparatus (20) is set to be "three months."

### [User]

The user (21) is an owner of the refrigeration apparatus (20), and handles the information terminal (22). The information terminal (22) includes a processing unit (e.g., a CPU), a storage unit (e.g., a memory), an input unit (e.g., a keyboard and/or a touch panel), and a display unit (e.g., a liquid crystal display), and is able to communicate with the information processing apparatus (10) and other information terminals (e.g., the information terminal (32)).

The information terminal (22) is connected to a monitor (23). The monitor (23) monitors the operation conditions of the refrigeration apparatus (20). The monitor (23) periodically obtains information about the operation conditions of the refrigeration apparatus (20) (operation condition information), and sends the obtained operation condition information to the information processing apparatus (10) via the information terminal (22) and the telecommunications network (40).

### [Shop]

The shop (30) offers service involved with the refrigeration apparatus (20), e.g., selling and maintenance of the refrigeration apparatus (20). Employees of the shop (30) handle the information terminal (32). The information terminal (32) includes a processing unit (e.g., a CPU), a storage unit (e.g., a memory), an input unit (e.g., a keyboard and/or a touch panel), and a display unit (e.g., a liquid crystal display), and is able to communicate with the information processing apparatus (10) and other information terminals (e.g., the information terminal (22)).

The shop (30) has an inspector (31) who is a qualified person. Thus, the shop (30) is capable of offering regular inspection service (regular inspection by the qualified person) of the refrigeration apparatus (20). The inspector (31) is one of the employees of the shop (30).

In this example, a user (user 1) owns two refrigeration apparatuses (refrigeration apparatuses #001 and #002), and another user (user 2) owns a single refrigeration apparatus (refrigeration apparatus #003). The user 2 is a qualified person who is able to carry out the regular inspection of the refrigeration apparatus (20).

### [Information Storage Unit]

The information storage unit (11) stores the refrigeration apparatus (20) in association with operation condition information about the operation conditions of the refrigeration apparatus (20), the information terminal (22) of the user (21) or the information terminal (32) of the shop (30), the user (21) or the shop (30) being in charge of the regular inspection of the refrigeration apparatus (20), and the information terminal (22) of the user (21) in charge of the simple inspection of the refrigeration apparatus (20).

In this example, the information storage unit (11) stores an appliance management table (51), an operation condition management table (52), an inspector-in-charge management table (53), a time management table (54), a regular inspection check sheet (61), a simple inspection check sheet (62), a regular inspection management table (71), and a simple inspection management table (72).

### <Appliance Management Table>

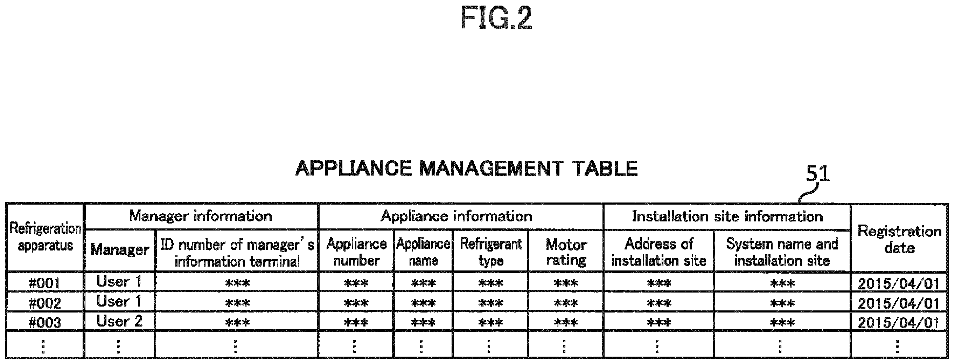

As shown in FIG. 2, the appliance management table (51) registers the refrigeration apparatus (20) in association with manager information, appliance information, and installation site information of the refrigeration apparatus (20), and a registration date. In this example, the manager information includes a manager of the refrigeration apparatus (20), and an identification number (e.g., an e-mail address, or an IP address) of an information terminal handled by the manager of the refrigeration apparatus (20). The appliance information includes the appliance number and appliance name of the refrigeration apparatus (20), the type of the refrigerant used in the refrigeration apparatus (20) (refrigerant type), and the motor rating of the refrigeration apparatus (20). The installation site information includes an address of the installation site of the refrigeration apparatus (20), and names of a piping system and the installation site in which the refrigeration apparatus (20) is installed (system name and installation site). The registration date is the date when the appliance information and installation site information of the refrigeration apparatus (20) are registered in the appliance management table (51). In the drawings, letters and numeric values registered in items of tables may sometimes be simplified as "***."

### <Operation Condition Management Table>

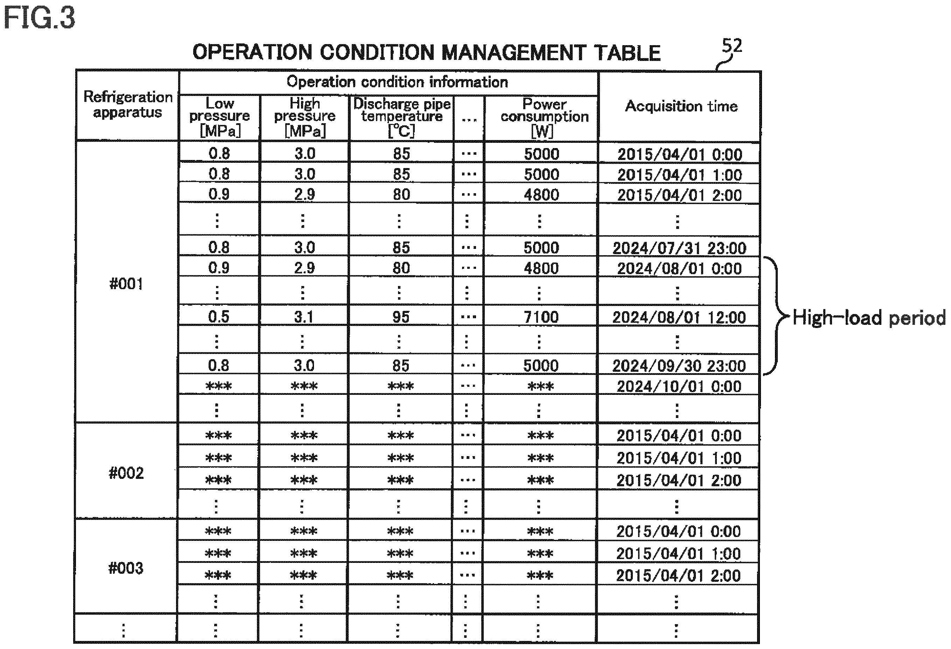

As shown in FIG. 3, in the operation condition management table (52), the refrigeration apparatus (20) is registered in association with the operation condition information (information about the operation conditions) of the refrigeration apparatus (20), and time when the operation condition information was obtained. In this example, the operation condition information includes at least "low pressure (evaporating pressure)," "high pressure (condensing pressure)," "discharge pipe temperature," "power supply voltage," "current of motor for driving compressor," "suction gas temperature," "evaporation saturation temperature," "condensation saturation temperature," "degree of superheat," and "power consumption."

### <Inspector-In-Charge Management Table>

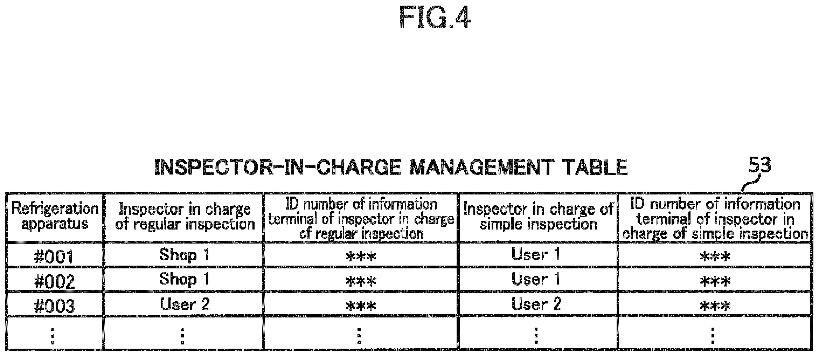

As shown in FIG. 4, the inspector-in-charge management table (53) registers the refrigeration apparatus (20) in association with an inspector in charge of the regular inspection of the refrigeration apparatus (20) (the user (21) or the shop (30)), the identification number (e.g., an e-mail address or an IP address) of an information terminal (the user's information terminal (22) or the shop's information terminal (32)) handled by the inspector in charge of the regular inspection of the refrigeration apparatus (20), an inspector in charge of the simple inspection of the refrigeration apparatus (20) (the user (21)), and the identification number (e.g., an e-mail address or an IP address) of an information terminal handled by the inspector in charge of the simple inspection of the refrigeration apparatus (20). In this manner, the identification number of the information terminal handled by the inspector in charge of the regular inspection of the refrigeration apparatus (20) is associated with the refrigeration apparatus (20). As a result, the information terminal handled by the inspector in charge of the regular inspection of the refrigeration apparatus (20) (the information terminal (22) of the user (21) or the information terminal (32) of the shop (30)) is associated with the refrigeration apparatus (20). Likewise, the identification number of the information terminal handled by the inspector in charge of the simple inspection of the refrigeration apparatus (20) is associated with the refrigeration apparatus (20). As a result, the information terminal handled by the inspector in charge of the simple inspection of the refrigeration apparatus (20) (the information terminal (22) of the user (21)) is associated with the refrigeration apparatus (20).

### <Time Management Table>

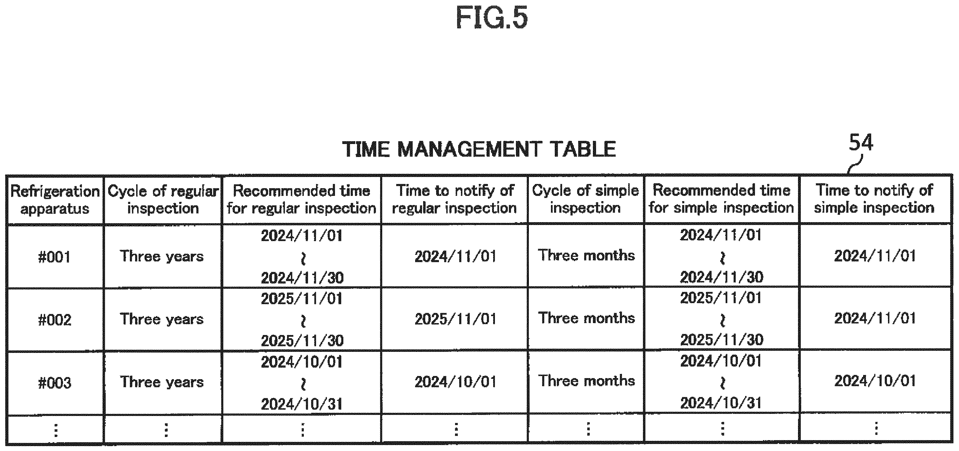

As shown in FIG. 5, in the time management table (54), the refrigeration apparatus (20) is registered in association with the cycle of the regular inspection, recommended time for the regular inspection, time to notify of the regular inspection, the cycle of the simple inspection, recommended time for the simple inspection, and time to notify of the simple inspection.

The recommended time for the regular inspection is time when the regular inspection of the refrigeration apparatus (20) is recommended (i.e., a period in which the regular inspection of the refrigeration apparatus (20) is desired). In this example, the recommended time for the regular inspection is set to be one month, the end of which is an expiration date of a predetermined period starting from the day following the last regular inspection of the refrigeration apparatus (20) (or the date of registration in the appliance management table (51)). For example, the predetermined period is previously set as the cycle of the regular inspection, i.e., three years in this example. The time to notify of the regular inspection is predetermined time to send information about the regular inspection, and is set to be the day on or before the start date of the recommended time for the regular inspection (the start date of the recommended time for the regular inspection in this example).

The recommended time for the simple inspection is time when the simple inspection of the refrigeration apparatus (20) is recommended (i.e., a period in which the simple inspection of the refrigeration apparatus (20) is desired). In this example, the recommended time for the simple inspection is set to be one month, the end of which is an expiration date of a predetermined period starting from the day following the last simple inspection of the refrigeration apparatus (20) (or the date of registration in the appliance management table (51)). For example, the predetermined period is previously set as the cycle of the simple inspection, i.e., three months in this example. The time to notify of the simple inspection is time to send information about the simple inspection, and is set to be the day on or before the start day of the recommended time for the simple inspection (the start date of the recommended time for the simple inspection in this example).

### <Regular Inspection Check Sheet>

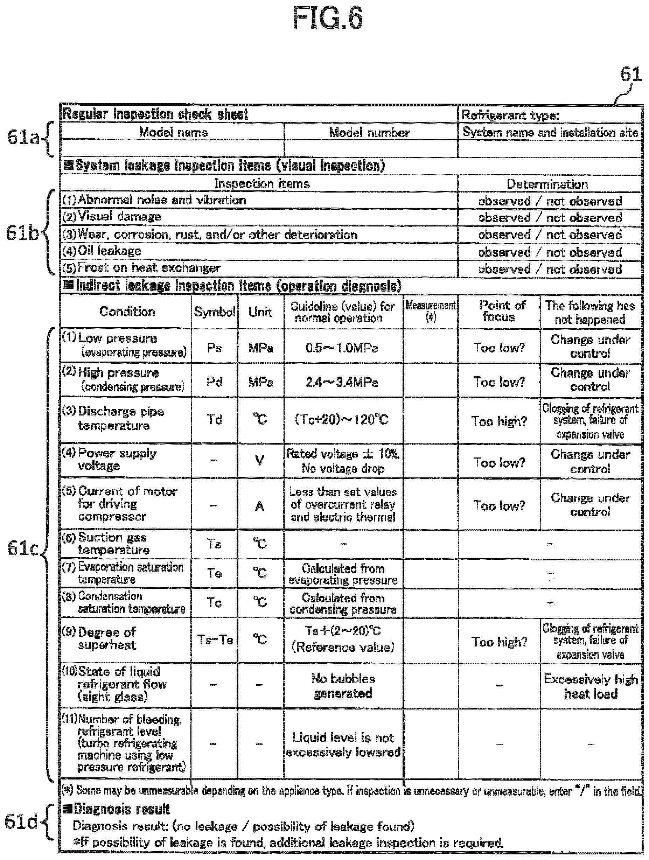

As shown in FIG. 6, a regular inspection check sheet (61) includes an appliance information row (61a), a visual inspection row (61b), an operation condition inspection row (61c), and a diagnosis result row (61d).

The appliance information row (61a) includes items related to the appliance information of the refrigeration apparatus (20). In this example, information items such as "model name (appliance name)," "model number (appliance number)," "refrigerant type," and "system name and installation site" are registered in the appliance information row (61a).

The visual inspection row (61b) includes items related to the visual inspection of the refrigeration apparatus (20) in the regular inspection. In this example, information items such as "abnormal noise and vibration," "visual damage," "wear, corrosion, rust, and/or other deterioration," "oil leakage," and "frost on heat exchanger" are registered in the visual inspection row (61b).

The operation condition inspection row (61c) includes items related to the operation conditions of the refrigeration apparatus (20) in the regular inspection. In this example, information items such as "low pressure (evaporating pressure)," "high pressure (condensing pressure)," "discharge pipe temperature," "power supply voltage," "current of motor for driving compressor," "suction gas temperature," "evaporation saturation temperature," "condensation saturation temperature," "degree of superheat," "state of liquid refrigerant flow (sight glass)," "the number of bleeding and refrigerant level (a turbo refrigerating machine using a low pressure refrigerant)" are registered in the operation condition inspection row (61c).

The diagnosis result row (61d) includes items related to the general inspection result (diagnosis result) of the regular inspection of the refrigeration apparatus (20). In this example, either of "no leakage" or "possibility of leakage found" is registered in the diagnosis result row (61d).

### <Simple Inspection Check Sheet>

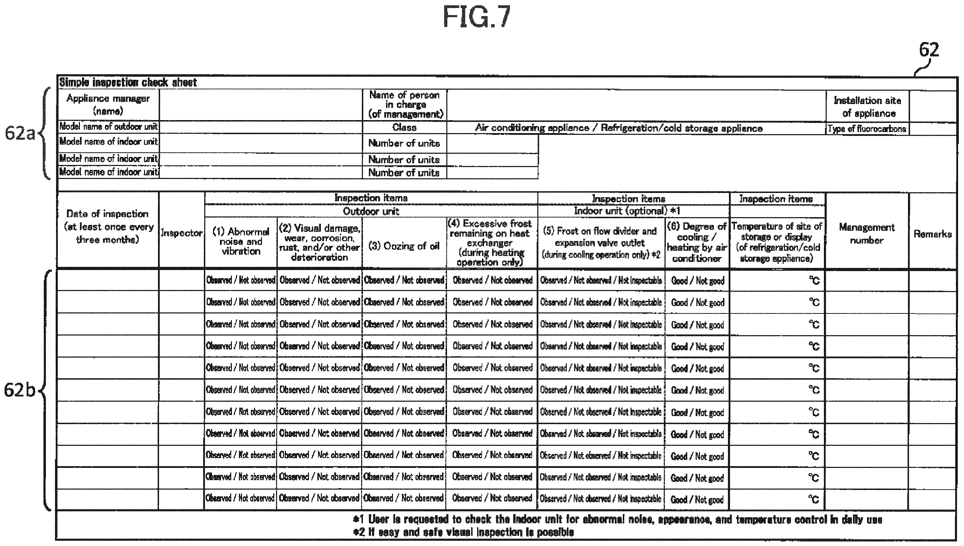

As shown in FIG. 7, a simple inspection check sheet (62) includes an appliance information row (62a) and a visual inspection row (62b).

The appliance information row (62a) includes items related to the appliance information of the refrigeration apparatus (20). In this example, information items such as "appliance manager," "person-in-charge," "installation site of appliance," "model name of outdoor unit," "model name of indoor unit," and "type of fluorocarbons (type of refrigerant)" are registered in the appliance information row (62a).

The visual inspection row (62b) includes items related to the visual inspection of the refrigeration apparatus (20) in the simple inspection. In this example, information items such as "abnormal noise and vibration," "visual damage, wear, corrosion, rust, and/or other deterioration" "oozing of oil," "excessive frost remaining on heat exchanger (during heating operation only)," "frost on flow divider and expansion valve outlet (during cooling operation only)," "degree of cooling/heating by air conditioner," and "temperature of site of storage or display (of a refrigeration/cold storage appliance)"are registered in the visual inspection row (62b).

### <Regular Inspection Management Table>

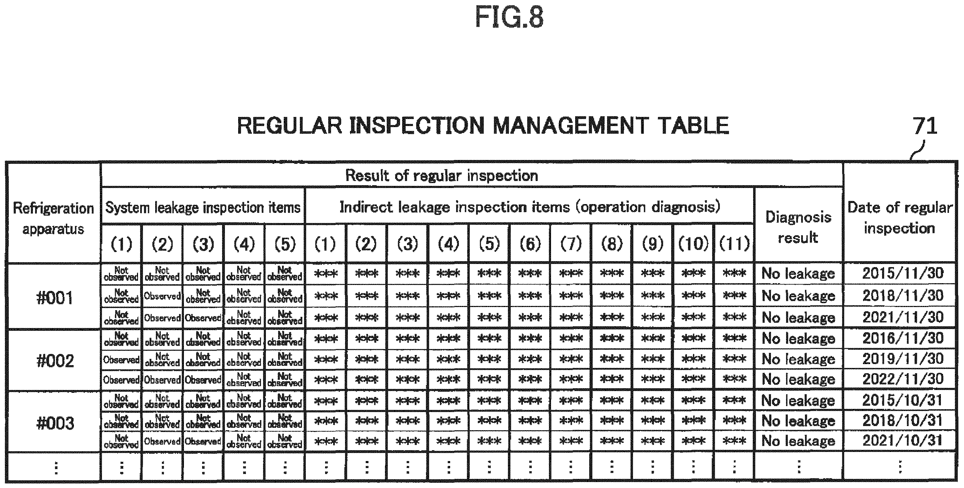

As shown in FIG. 8, in the regular inspection management table (71), the refrigeration apparatus (20) is registered in association with the result of the regular inspection of the refrigeration apparatus (20), and the date on which the regular inspection of the refrigeration apparatus (20) was performed.

### <Simple Inspection Management Table>

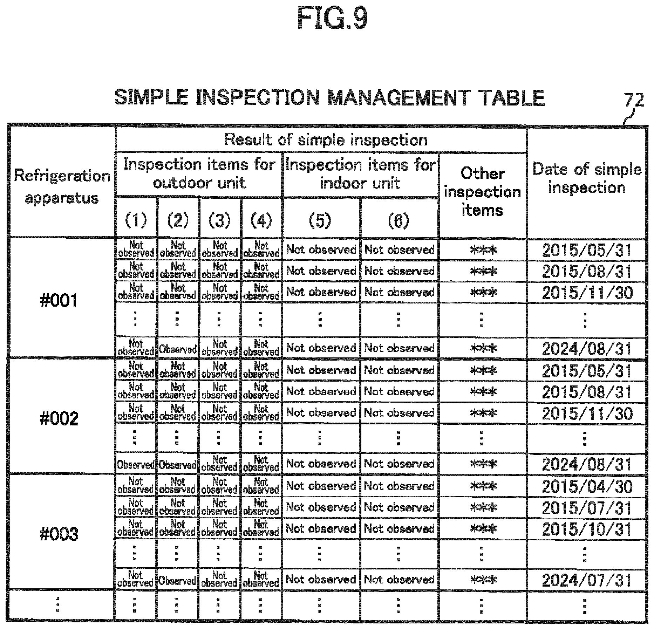

As shown in FIG. 9, in the simple inspection management table (72), the refrigeration apparatus (20) is registered in association with the result of the simple inspection of the refrigeration apparatus (20), and the date on which the simple inspection of the refrigeration apparatus (20) was performed.

### [Information Processing Unit]

The information processing unit (12) is connected to the information terminals (22, 32) of the user (21) and the shop (30) via the telecommunications network (40), and is able to communicate with the information terminals (22, 32).

Receiving the operation condition information of the refrigeration apparatus (20) sent from the monitor (23), the information processing unit (12) registers the obtained operation condition information of the refrigeration apparatus (20) in the operation condition management table (52). Specifically, the information processing unit (12) detects, from the appliance management table (51), the refrigeration apparatus (20) corresponding to the identification number of the information terminal from which the operation condition information has been sent, and stores the detected refrigeration apparatus (20) in association with the operation condition information in the information storage unit (11).

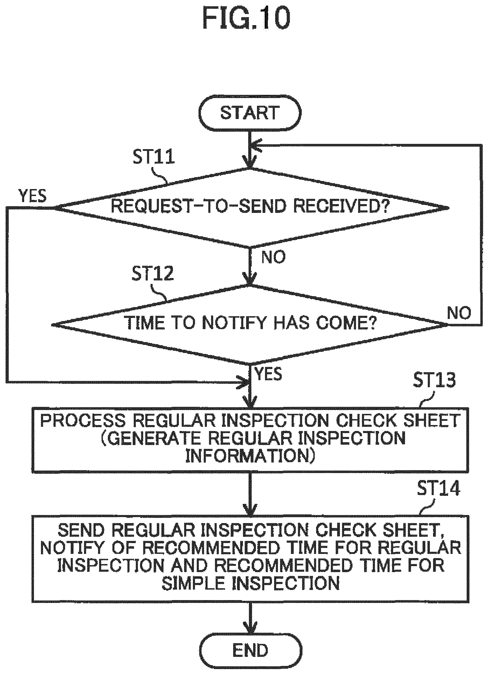

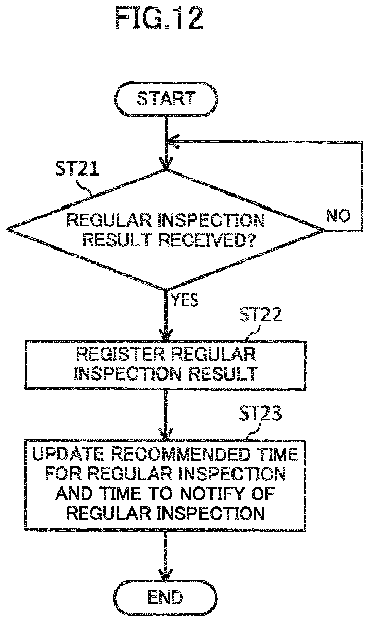

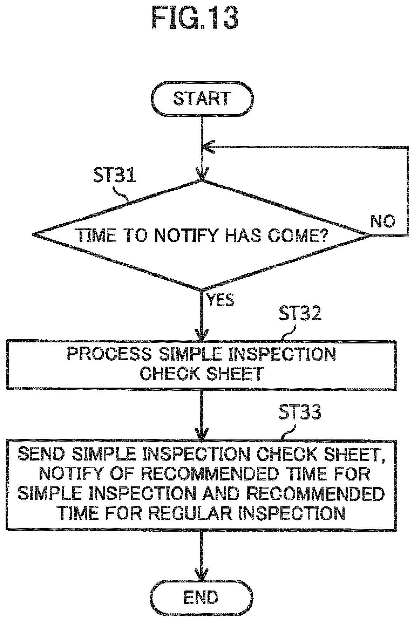

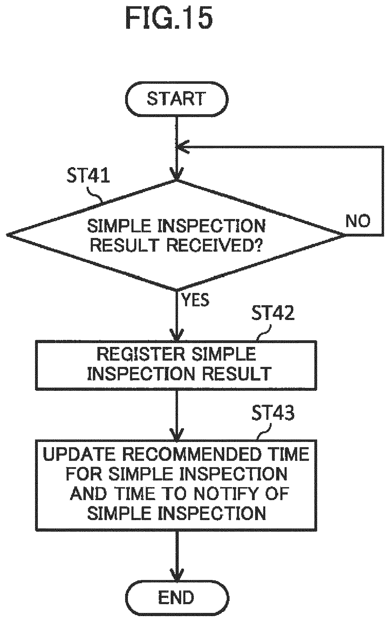

The information processing unit (12) also performs a pre-regular inspection process (FIG. 10), a post-regular inspection process (FIG. 12), a pre-simple inspection process (FIG. 13), and a post-simple inspection process (FIG. 15).

### <Pre-Regular Inspection Process>

The pre-regular inspection process will be described with reference to FIG. 10. The information processing unit (12) performs the pre-regular inspection process on every refrigeration apparatus (20) stored in the information storage unit (11). When the inspector in charge of the regular inspection of the refrigeration apparatus (20) (the user (21) or the shop (30)) requires the regular inspection information (the regular inspection check sheet (61) in which the regular inspection information is registered in this example), he or she operates his or her information terminal (the user's information terminal (22) or the shop's information terminal (32)) to send a request to send the regular inspection information to the information processing apparatus (10). The regular inspection information includes information to be used for the regular inspection, i.e., items related to the operation conditions of the refrigeration apparatus (20).

### «Step (ST11)»

Referring to the inspector-in-charge management table (53), the information processing unit (12) determines whether the request to send the regular inspection information (the regular inspection check sheet (61) in which the regular inspection information is registered in this example) has been received from the inspector in charge of the regular inspection of the refrigeration apparatus (20) (the user (21) or the shop (30)). Specifically, the information processing unit (12) determines whether the request to send the regular inspection information has been received from the information terminal having the same identification number as that of the inspector in charge of the regular inspection associated with the refrigeration apparatus (20) in the inspector-in-charge management table (53). If the request to send the regular inspection information has been received, the process proceeds to step (ST13). If not, the process proceeds to step (ST12).

### «Step (ST12)»

Referring to the time management table (54), the information processing unit (12) determines whether the time to notify of the regular inspection of the refrigeration apparatus (20) has come or not. Specifically, the information processing unit (12) determines whether the time to notify of the regular inspection associated with the refrigeration apparatus (20) in the time management table (54) has come or not. If the time to notify of the regular inspection of the refrigeration apparatus (20) has come, the process proceeds to step (ST13). If not, the process proceeds to step (ST11).

### «Step (ST13)»

Then, the information processing unit (12) detects, from the operation condition management table (52), the operation condition information associated with the refrigeration apparatus (20) of which the request to send the regular inspection information has been sent (or the refrigeration apparatus (20) of which the time to notify of the regular inspection has come), and generates, based on the detected operation condition information, the regular inspection information about the refrigeration apparatus (20) (information to be used for the regular inspection and including items related to the operation conditions of the refrigeration apparatus (20)). In this example, the regular inspection information includes "low pressure (evaporating pressure)," "high pressure (condensing pressure)," "discharge pipe temperature," "power supply voltage," "current of motor for driving compressor," "suction gas temperature," "evaporation saturation temperature," "condensation saturation temperature," and "degree of superheat."

In this example, the information processing unit (12) generates the regular inspection information based on the operation condition information which is associated with the refrigeration apparatus (20) in the operation condition management table (52) and which has been obtained in a high-load period (a period of year in which the refrigeration apparatus (20) is presumably under a relatively high load, i.e., from August 1 to September 30 in this example). Specifically, the information processing unit (12) adopts, as the regular inspection information, the operation condition information obtained when the power consumption was the maximum in the high-load period (the operation condition information obtained at 12:00 on August 1, 2024 in this example).

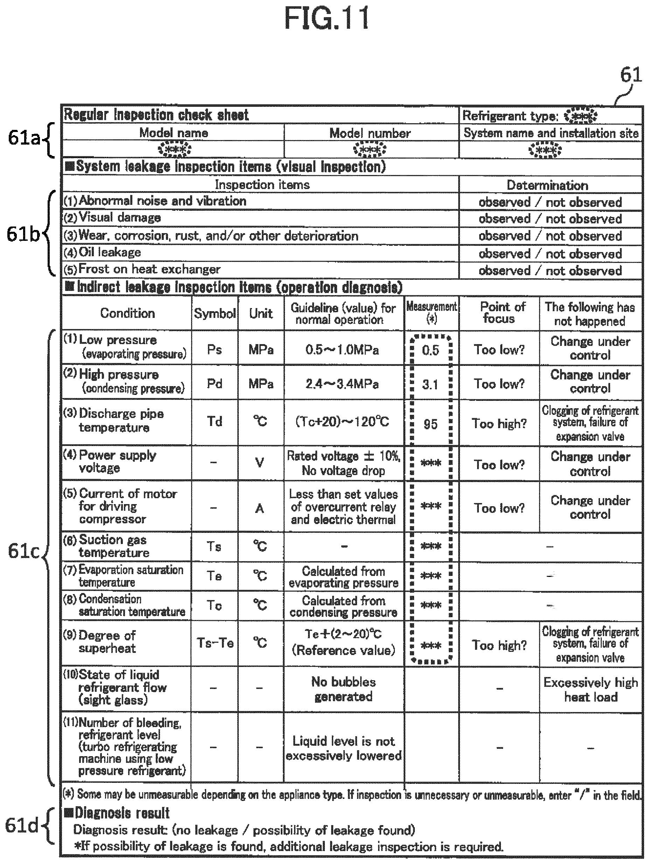

Further, in this example, the information processing unit (12) detects, from the appliance management table (51), the appliance information (model name, model number, and refrigerant type in this example) and installation site information (system name and installation site in this example) associated with the refrigeration apparatus (20) of which the request to send the regular inspection information has been sent (or the refrigeration apparatus (20) of which the time to notify of the regular inspection has come). Then, the information processing unit (12) registers, in the regular inspection check sheet (61), the regular inspection information of the refrigeration apparatus (20) generated based on the operation condition information detected from the operation condition information management table (52), and the appliance information and installation site information of the refrigeration apparatus (20) detected from the appliance management table (51). Specifically, as indicated by dotted circles in FIG. 11, the information processing unit (12) registers the appliance information and installation site information of the refrigeration apparatus (20) in the appliance information row (61a) of the regular inspection check sheet (61), and the regular inspection information of the refrigeration apparatus (20) in the operation condition inspection row (61c) of the regular inspection check sheet (61).

### «Step (ST14)»

Next, referring to the inspector-in-charge management table (53), the information processing unit (12) sends the regular inspection information of the refrigeration apparatus (20) generated in Step (ST13) (in this example, the regular inspection check sheet (61) in which the regular inspection information is registered) to the information terminal of the inspector in charge of the regular inspection of the refrigeration apparatus (20) (the information terminal (22) of the user (21) or the information terminal (32) of the shop (30)). Specifically, the information processing unit (12) sends the regular inspection information of the refrigeration apparatus (20) generated in Step (ST13) to the information terminal (the user's information terminal (22) or the shop's information terminal (32)) having the same identification number (e.g., IP address) as that of the information terminal of the inspector in charge of the regular inspection associated with the refrigeration apparatus (20) in the inspector-in-charge management table (53).

Further, the information processing unit (12) detects, from the time management table (54), the recommended time for the regular inspection and the recommended time for simple inspection associated with the refrigeration apparatus (20) of which the request to send the regular inspection information has been received in Step (ST11) (or the refrigeration apparatus (20) of which the time to notify of the regular inspection has come in Step (ST12)). Then, in addition to the sending of the regular inspection information of the refrigeration apparatus (20) (in this example, the regular inspection check sheet (61) in which the regular inspection information is registered), the information processing unit (12) refers to the inspector-in-charge management table (53) to notify the information terminal of the inspector in charge of the regular inspection of the refrigeration apparatus (20) (the information terminal (22) of the user (21) or the information terminal (32) of the shop (30)) of the recommended time for the regular inspection and the recommended time for the simple inspection of the refrigeration apparatus (20) detected from the time management table (54). Specifically, the information processing unit (12) sends the recommended time for the regular inspection and the recommended time for the simple inspection of the refrigeration apparatus (20) detected from the time management table (54) to the information terminal (the user's information terminal (22) or the shop's information terminal (32)) having the same identification number as that of the information terminal of the inspector in charge of the regular inspection associated with the refrigeration apparatus (20) in the inspector-in-charge management table (53).

Receiving the regular inspection information (in this example, the regular inspection check sheet (61) in which the regular inspection information is registered) from the information processing apparatus (10), the information terminal of the inspector in charge of the regular inspection of the refrigeration apparatus (20) (the user's information terminal (22) or the shop's information terminal (32)) displays the regular inspection information to prompt the inspector in charge of the regular inspection of the refrigeration apparatus (20) (the user (21) or the shop (30)) to perform the regular inspection of the refrigeration apparatus (20). Receiving the notification of the recommended time for the regular inspection and the recommended time for the simple inspection from the information processing apparatus (10), the information terminal of the inspector in charge of the regular inspection of the refrigeration apparatus (20) (the information terminal (22) or the information terminal (32)) displays the recommended time for the regular inspection and the recommended time for the simple inspection to notify the inspector in charge of the regular inspection of the refrigeration apparatus (20) (the user (21) or the shop (30)) of the recommended time for the regular inspection and the recommended time for the simple inspection.

### <Post-Regular Inspection Process>

The post-regular inspection process will be described below with reference to FIG. 12. When the regular inspection of the refrigeration apparatus (20) is finished, the inspector in charge of the regular inspection of the refrigeration apparatus (20) (the user (21) or the shop (30)) inputs the result of the regular inspection of the refrigeration apparatus (20) (i.e., the inspection results in the rows of the regular inspection check sheet (61)) to the information terminal (information terminal (22) or information terminal (32)) together with the date of the regular inspection, and operates his or her information terminal (information terminal (22) or information terminal (32)) to send the result and date of the regular inspection of the refrigeration apparatus (20) to the information processing apparatus (10). The information processing unit (12) performs the post-regular inspection process on every refrigeration apparatus (20) stored in the information storage unit (11).

### «Step (ST21)»

Referring to the inspector-in-charge management table (53), the information processing unit (12) determines whether the result and date of the regular inspection have been received from the information terminal handled by the inspector in charge of the regular inspection of the refrigeration apparatus (20) (the information terminal (22) of the user (21) or the information terminal (32) of the shop (30)). Specifically, the information processing unit (12) determines whether the result of the regular inspection of the refrigeration apparatus (20) has been received from the information terminal (the information terminal (22) or the information terminal (32)) having the same identification number (e.g., IP address) as that of the information terminal of the inspector-in-charge of the regular inspection associated with the refrigeration apparatus (20) in the inspector-in-charge management table (53). Upon receiving the result of the regular inspection of the refrigeration apparatus (20), the process proceeds to Step (ST22).

### «Step (ST22)»

Then, the information processing unit (12) registers, in the regular inspection management table (71), the refrigeration apparatus (20) in association with the result and date of the regular inspection received in Step (ST21).

### «Step (ST23)»

Then, the information processing unit (12) updates the recommended time for the regular inspection and the time to notify of the regular inspection of the refrigeration apparatus (20) that have been registered in the time management table (54), based on the date of the regular inspection of the refrigeration apparatus (20) newly registered in the regular inspection management table (71). For example, the information processing unit (12) updates the recommended time for the regular inspection of the refrigeration apparatus (20) that has been registered in the time management table (54) to one month, the end of which is an expiration date of three years starting from the day following the date of the regular inspection of the refrigeration apparatus (20) newly registered in the regular inspection management table (71), and updates the time to notify of the regular inspection of the refrigeration apparatus (20) that has been registered in the time management table (54) to a start date of the updated recommended time for the regular inspection.

### <Pre-Simple Inspection Process>

The pre-simple inspection process will be described below with reference to FIG. 13. The information processing unit (12) performs the pre-simple inspection process on every refrigeration apparatus (20) stored in the information storage unit (11).

### «Step (ST31)»

Referring to the time management table (54), the information processing unit (12) determines whether the time to notify of the simple inspection of the refrigeration apparatus (20) has come or not. Specifically, the information processing unit (12) determines whether the time to notify of the simple inspection associated with the refrigeration apparatus (20) in the time management table (54) has come or not. When the time to notify of the simple inspection of the refrigeration apparatus (20) has come, the process proceeds to Step (ST32).

### «Step (ST32)»

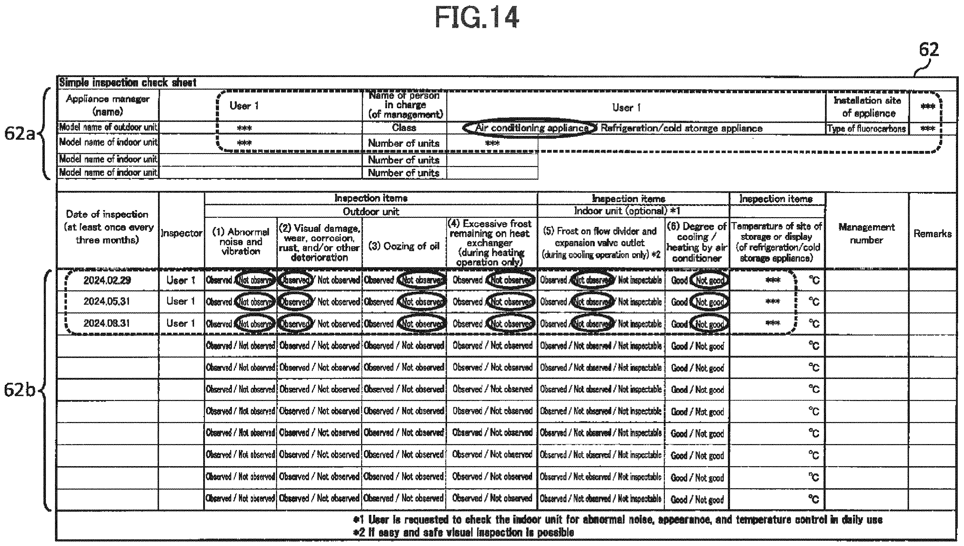

The information processing unit (12) detects, from the simple inspection management table (72), the result of the simple inspection performed on the refrigeration apparatus (20) of which the time to notify of the simple inspection has come (the result of the last simple inspection) and the date of the simple inspection. The information processing unit (12) detects, from the appliance management table (51), the appliance information and the installation site information associated with the refrigeration apparatus (20) of which the time to notify of the simple inspection has come. Then, the information processing unit (12) registers, in the simple inspection check sheet (62), the result and date of the simple inspection of the refrigeration apparatus (20) detected from the simple inspection management table (72), and the appliance information and installation site information of the refrigeration apparatus (20) detected from the appliance management table (51). Specifically, as indicated by dotted circles in FIG. 14, the information processing unit (12) registers the appliance information and installation site information of the refrigeration apparatus (20) in the appliance information row (62a) of the simple inspection check sheet (62), and the result and date of the simple inspection of the refrigeration apparatus (20) in the visual inspection row (62b) of the simple inspection check sheet (62).

### «Step (ST33)»

Then, the information processing unit (12) detects, from the time management table (54), the recommended time for the simple inspection and the recommended time for the regular inspection associated with the refrigeration apparatus (20) of which the time to notify of the simple inspection has come. Referring to the inspector-in-charge management table (53), the information processing unit (12) notifies the information terminal of the inspector in charge of the simple inspection of the refrigeration apparatus (20) (the information terminal (22) of the user (21)) of the recommended time for the simple inspection and the recommended time for the regular inspection of the refrigeration apparatus (20) detected from the time management table (54). Specifically, the information processing unit (12) sends the recommended time for the simple inspection and the recommended time for the regular inspection of the refrigeration apparatus (20) detected from the time management table (54) to the information terminal (the information terminal (22)) having the same identification number as that of the information terminal of the inspector in charge of the simple inspection associated with the refrigeration apparatus (20) in the inspector-in-charge management table (53).

In addition to the notification of the recommended time for the simple inspection and the recommended time for the regular inspection of the refrigeration apparatus (20), the information processing unit (12) refers to the inspector-in-charge management table (53), and sends the simple inspection check sheet, in which the result and date of the simple inspection of the refrigeration apparatus (20) have been registered in Step (ST32), to the information terminal handled by the inspector in charge of the simple inspection of the refrigeration apparatus (20) (the information terminal (22) of the user (21)). Specifically, the information processing unit (12) sends the simple inspection check sheet (62) in which the result and date of the simple inspection of the refrigeration apparatus (20) have been registered in Step (ST32) to the information terminal (information terminal (22)) having the same identification number as that of the information terminal of the inspector in charge of the simple inspection associated with the refrigeration apparatus (20) in the inspector-in-charge management table (53).

Receiving the notification of the recommended time for the simple inspection and the recommended time for the regular inspection from the information processing apparatus (10), the information terminal of the inspector in charge of the simple inspection of the refrigeration apparatus (20) (information terminal (22)) displays the recommended time for the simple inspection and the recommended time for the regular inspection to notify the inspector in charge of the simple inspection of the refrigeration apparatus (20) (the user (21)) of the recommended time for the simple inspection and the recommended time for the regular inspection. Receiving the simple inspection check sheet (62) sent from the information processing apparatus (10), the information terminal of the inspector in charge of the simple inspection of the refrigeration apparatus (20) (the information terminal (22)) displays the simple inspection check sheet (62) to prompt the inspector in charge of the simple inspection of the refrigeration apparatus (20) (the user (21)) to perform the simple inspection of the refrigeration apparatus (20).

### <Post-Simple Inspection Process>

The post-simple inspection process will be described below with reference to FIG. 15. When the simple inspection of the refrigeration apparatus (20) is finished, the inspector in charge of the simple inspection of the refrigeration apparatus (20) (the user (21)) inputs the result of the simple inspection of the refrigeration apparatus (20) (the inspection results in the rows of the simple inspection check sheet (62)) and the date of the simple inspection into the information terminal (the information terminal (22)), and operates the information terminal (the information terminal (22)) to send the result and date of the simple inspection of the refrigeration apparatus (20) to the information processing apparatus (10). The information processing unit (12) performs the post-simple inspection process on every refrigeration apparatus (20) stored in the information storage unit (11).

### «Step (ST41)»

Referring to the inspector-in-charge management table (53), the information processing unit (12) determines whether the result and date of the simple inspection have been received from the information terminal handled by the inspector in charge of the simple inspection of the refrigeration apparatus (20) (the information terminal (22) of the user (21)). Specifically, the information processing unit (12) determines whether the result of the simple inspection of the refrigeration apparatus (20) has been received from the information terminal (information terminal (22)) having the same identification number as that of the information terminal of the inspector in charge of the simple inspection associated with the refrigeration apparatus (20) in the inspector-in-charge management table (53). When the result of the simple inspection of the refrigeration apparatus (20) has been received, the process proceeds to Step (ST42).

### «Step (ST42)»

Then, the information processing unit (12) registers, in the simple inspection management table (72), the refrigeration apparatus (20) in association with the result and date of the simple inspection received in Step (ST41).

### «Step (ST43)»

Then, the information processing unit (12) updates the recommended time for the simple inspection and the time to notify of the simple inspection of the refrigeration apparatus (20) that have been registered in the time management table (54), based on the date of the simple inspection of the refrigeration apparatus (20) newly registered in the simple inspection management table (72). For example, the information processing unit (12) updates the recommended time for the simple inspection of the refrigeration apparatus (20) registered in the time management table (54) to one month, the end of which is an expiration date of three months starting from the day following the date of the simple inspection of the refrigeration apparatus (20) newly registered in the simple inspection management table (72), and updates the time to notify of the simple inspection of the refrigeration apparatus (20) registered in the time management table (54) to a start date of the updated recommended time for the simple inspection.

### [Advantages of Embodiment]

As can be seen in the foregoing, the information processing unit (12) generates the regular inspection information (information to be used for the regular inspection and including items related to the operation conditions of the refrigeration apparatus (20)) based on the operation condition information associated with the refrigeration apparatus (20) in the information storage unit (11). Further, the information processing unit (12) sends the regular inspection information thus generated to the information terminal (22) or (32) which is handled by the user (21) or the shop (30) in charge of the regular inspection of the refrigeration apparatus (20) and associated with the refrigeration apparatus (20) in the information storage unit (11). In this configuration, the regular inspection information (information to be used for the regular inspection of the refrigeration apparatus (20) and including items related to the operation conditions of the refrigeration apparatus (20)) can be provided for the inspector in charge of the regular inspection of the refrigeration apparatus (20) (the user (21) or the shop (30)). This can assist the inspector in charge of the regular inspection of the refrigeration apparatus (20) to obtain the regular inspection information. That is, the inspector in charge of the regular inspection no longer needs to perform measurement of the refrigeration apparatus (20) (measurement to obtain the regular inspection information). Thus, the burdens on the inspector in charge of the regular inspection of the refrigeration apparatus (20) can be reduced.

Further, receiving a request to send the regular inspection information from the information terminal (22) of the user (21) or the information terminal (32) of the shop (30), the information processing unit (12) sends the regular inspection information, which is generated based on the operation condition information of the refrigeration apparatus (20) associated with the information terminal (22, 32) in the information storage unit (11), to the information terminal (22, 32). In this configuration, the regular inspection information of the refrigeration apparatus (20) can be provided for the inspector in charge of the regular inspection of the refrigeration apparatus (20) in response to the request from the inspector in charge of the regular inspection of the refrigeration apparatus (20) (the user (21) or the shop (30)). Thus, the regular inspection information can be provided for the inspector in charge of the regular inspection of the refrigeration apparatus (20) at suitable timing (when he or she requires the regular inspection information of the refrigeration apparatus (20)).

In addition, when the time to notify of the regular inspection, which is predetermined for the refrigeration apparatus (20), has come, the information processing unit (12) sends the regular inspection information generated based on the operation condition information associated with the refrigeration apparatus (20) in the information storage unit (11) to the information terminal (22) or the information terminal (32) which is handled by the user (21) or the shop (30) in charge of the regular inspection of the refrigeration apparatus (20) and associated with the refrigeration apparatus (20) in the information storage unit (11). In this configuration, the regular inspection information of the refrigeration apparatus (20) can be automatically provided for the inspector in charge of the regular inspection of the refrigeration apparatus (20). Thus, the inspector in charge of the regular inspection of the refrigeration apparatus (20) no longer needs to send the request to send the regular inspection information. This can reduce the burdens on the inspector in charge of the regular inspection of the refrigeration apparatus (20).

Further, the information processing unit (12) generates the regular inspection information based on the operation condition information which is associated with the refrigeration apparatus (20) in the information storage unit (11) and obtained in a high-load period of year in which the refrigeration apparatus (20) is presumably under a relatively high load. In general, the refrigeration apparatus (20) tends to operate at relatively high capacity in a period when it is presumably under a relatively high load (in the high-load period, e.g., in summer), while the refrigeration apparatus (20) tends to operate at relatively low capacity in a period when it is presumably under a relatively low load (in a low-load period, e.g., in a moderate season). That is, the operation condition information of the refrigeration apparatus (20) obtained in the high-load period is probably that of the active refrigeration apparatus (20). Thus, if the regular inspection information is generated based on the operation condition information which is associated with the refrigeration apparatus (20) and obtained in the high-load period, the accuracy of the items related to the operation conditions of the refrigeration apparatus (20) included in the regular inspection information can be improved. This can improve the accuracy of the regular inspection of the refrigeration apparatus (20) by the inspector in charge of the regular inspection of the refrigeration apparatus (20).

Moreover, in addition to the sending of the regular inspection information about the refrigeration apparatus (20), the information processing unit (12) notifies the information terminal (22) or the information terminal (32), which is handled by the user (21) or the shop (30) in charge of the regular inspection of the refrigeration apparatus (20) and associated with the refrigeration apparatus (20) in the information storage unit (11), of the recommended time for the regular inspection predetermined for the refrigeration apparatus (20) (the time when the regular inspection of the refrigeration apparatus (20) is recommended). In this configuration, the inspector in charge of the regular inspection of the refrigeration apparatus (20) can be notified of the recommended time for the regular inspection of the refrigeration apparatus (20). This can assist time management of the regular inspection by the inspector in charge of the regular inspection of the refrigeration apparatus (20). That is, the inspector in charge of the regular inspection of the refrigeration apparatus (20) no longer needs to do the time management of the regular inspection. Thus, the burdens on the inspector in charge of the regular inspection of the refrigeration apparatus (20) can be reduced.

Moreover, when the time to notify of the simple inspection, which is predetermined for the refrigeration apparatus (20), has come, the information processing unit (12) notifies the information terminal (22), which is handled by the user (21) in charge of the simple inspection of the refrigeration apparatus (20) and associated with the refrigeration apparatus (20) in the information storage unit (11), of the recommended time for the simple inspection predetermined for the refrigeration apparatus (20) (the time when the simple inspection of the refrigeration apparatus (20) is recommended). In this configuration, the inspector in charge of the simple inspection of the refrigeration apparatus (20) (the user (21)) can be automatically notified of the recommended time for the simple inspection of the refrigeration apparatus (20). This can assist time management of the simple inspection by the inspector in charge of the simple inspection of the refrigeration apparatus (20). That is, the inspector in charge of the simple inspection of the refrigeration apparatus (20) no longer needs to do the time management of the simple inspection. As a result, the burdens on the inspector in charge of the simple inspection of the refrigeration apparatus (20) can be reduced.

Further, in addition to the notification of the recommended time for the simple inspection of the refrigeration apparatus (20), the information processing unit (12) notifies the information terminal (22), which is handled by the user (21) in charge of the simple inspection of the refrigeration apparatus (20) and associated with the refrigeration apparatus (20) in the information storage unit (11), of the recommended time for the regular inspection predetermined for the refrigeration apparatus (20). In this configuration, the inspector in charge of the simple inspection of the refrigeration apparatus (20) can be notified of both of the recommended time for the simple inspection and recommended time for the regular inspection of the refrigeration apparatus (20). Thus, the user (21), who is the inspector in charge of the simple inspection of the refrigeration apparatus (20), can plan the inspection of the refrigeration apparatus (20) based on both of the recommended time for the simple inspection and recommended time for the regular inspection of the refrigeration apparatus (20). As a result, the regular and simple inspections of the refrigeration apparatus (20) can be performed efficiently.

Moreover, in addition to the notification of the recommended time for the simple inspection of the refrigeration apparatus (20), the information processing unit (12) sends the simple inspection check sheet to be used for the simple inspection of the refrigeration apparatus (20) to the information terminal (22) which is handled by the user (21) in charge of the simple inspection of the refrigeration apparatus (20) and associated with the refrigeration apparatus (20) in the information storage unit (11). In this configuration, the simple inspection check sheet for the refrigeration apparatus (20) can be provided for the inspector in charge of the simple inspection of the refrigeration apparatus (20). This can assist the inspector in charge of the simple inspection of the refrigeration apparatus (20) to prepare the simple inspection check sheet. That is, the inspector in charge of the simple inspection of the refrigeration apparatus (20) no longer needs to prepare the simple inspection check sheet. As a result, the burdens on the inspector in charge of the simple inspection of the refrigeration apparatus (20) can be reduced.

### (Setting of Recommended Time for Regular Inspection)

The recommended time for the regular inspection may be determined based on the status of use of the refrigeration apparatus (20). In so doing, the recommended time for the regular inspection can be determined in accordance with the status of use of the refrigeration apparatus (20), and the regular inspection of the refrigeration apparatus (20) can be performed at suitable timing in view of the status of use of the refrigeration apparatus (20).

Specifically, the information processing unit (12) may determine the recommended time for the regular inspection of the refrigeration apparatus (20) so that the recommended time for the regular inspection of at least some of the refrigeration apparatuses (20) owned by the same user (21) does not overlap with the recommended time for the regular inspection of the rest of the refrigeration apparatuses (20). For example, if there are 300 refrigeration apparatuses (20) owned by the same user (21), the information processing unit (12) determines the recommended time for the regular inspection of 100 refrigeration apparatuses (20) of the 300 refrigeration apparatuses (20) to be a first period, the recommended time for the regular inspection of another 100 refrigeration apparatuses (20) to be a second period, and the recommended time for the regular inspection of the remaining 100 refrigeration apparatuses (20) to be a third period. For example, the second period may be one year starting from the end of the first period, and the third period may be one year starting from the end of the second period. In this way, staggering the recommended times for the regular inspection of the plurality of refrigeration apparatuses (20) can level the cost required for the regular inspection of the refrigeration apparatuses (20). This can reduce the cost for the regular inspection of the refrigeration apparatuses (20) charged on the user (21).

### (Registration of Various Information Items)

In the information processing apparatus (10), the registration of various information items (manager information, appliance information, installation site information, and registration date) in the appliance management table (51), and the registration of various information items (the cycle of the regular inspection and the cycle of the simple inspection) in the time management table (54) may be carried out in the following manner. In this example, the information storage unit (11) stores, in addition to the tables (51, 52, 53, 54, 71, and 72) and the check sheets (61, 62) shown in FIGS. 1 to 9, an appliance information table (80), a manager registration form (81), and an appliance registration form (82). The information processing unit (12) performs an information registration process in addition to the processes shown in FIGS. 10, 12, 13, and 15. In one preferred embodiment, the information terminal (22) of the user (21) has a shooting function and a location information acquisition function (e.g., GPS). For example, the information terminal (22) may be a portable smartphone or tablet.

### <Appliance Information Table>

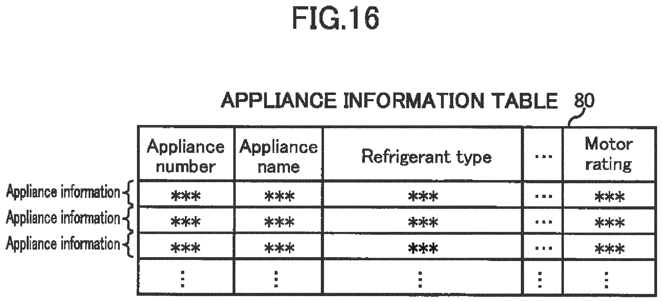

As shown in FIG. 16, plural appliance information items are registered in the appliance information table (80). In this example, the appliance information includes at least the "appliance number," "appliance name," "refrigerant type," and "motor rating."

### <Manager Registration Form>

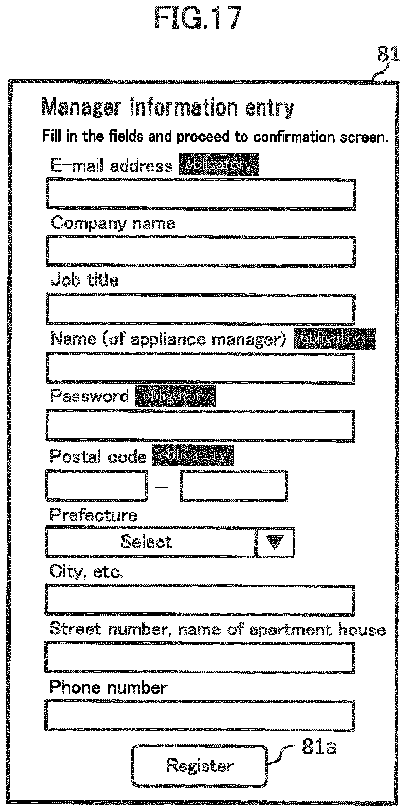

As shown in FIG. 17, the manager registration form (81) includes fields for the entry of information about the manager of the refrigeration apparatus (20) In this example, "e-mail address," "company name," "name of appliance manager," "password," "postal code," "prefecture," "city, etc.," "street number and name of apartment house," and "phone number" are entered in the manager registration form (81). The "e-mail address," the "name of appliance manager," and the "postal code" are obligatory. The manager registration form (81) is provided with a register button (81a).

### <Appliance Registration Form>

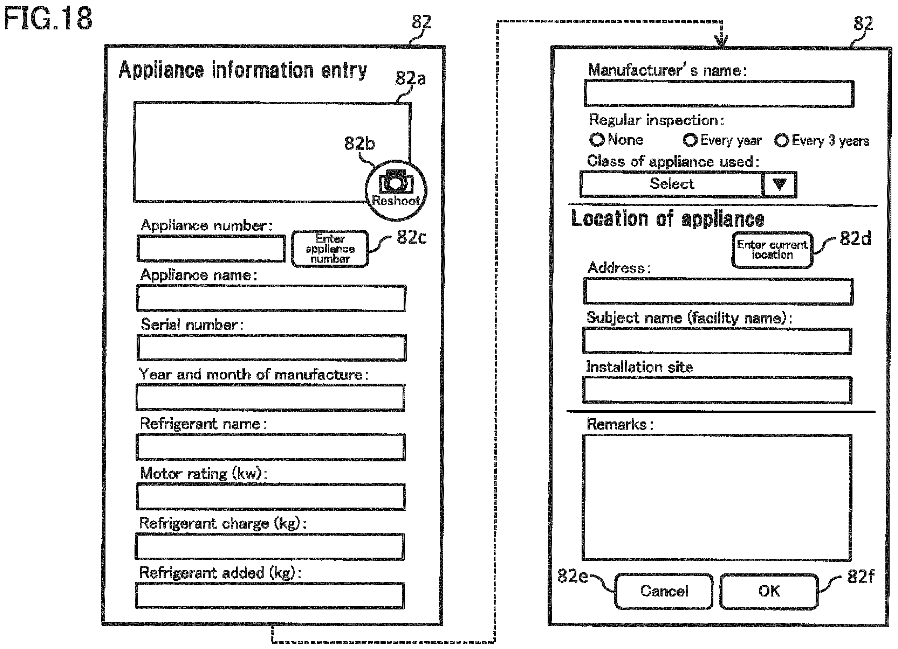

As shown in FIG. 18, the appliance registration form (82) includes fields for the entry of the appliance information of the refrigeration apparatus (20). In this example, "appliance number," "appliance name," "serial number," "year and month of manufacture," "refrigerant name (type of refrigerant used)," "motor rating," "refrigerant charge," "refrigerant added," "manufacturer's name," "history and cycle of regular inspection," and "class of appliance used" are entered in the appliance registration form (82). The appliance registration form (82) also includes fields for the entry of the installation site information of the refrigeration apparatus (20). In this example, "address (of the installation site)," "subject name (facility name)," and "installation site (name of installation site)" are entered in the appliance registration form (82). Further, the appliance registration form (82) is provided with a plate image display region (82a), a reshoot button (82b), an appliance information entry button (82c), a location information acquisition button (82d), a cancel button (82e), and an OK button (82f).

### <Information Registration Process>

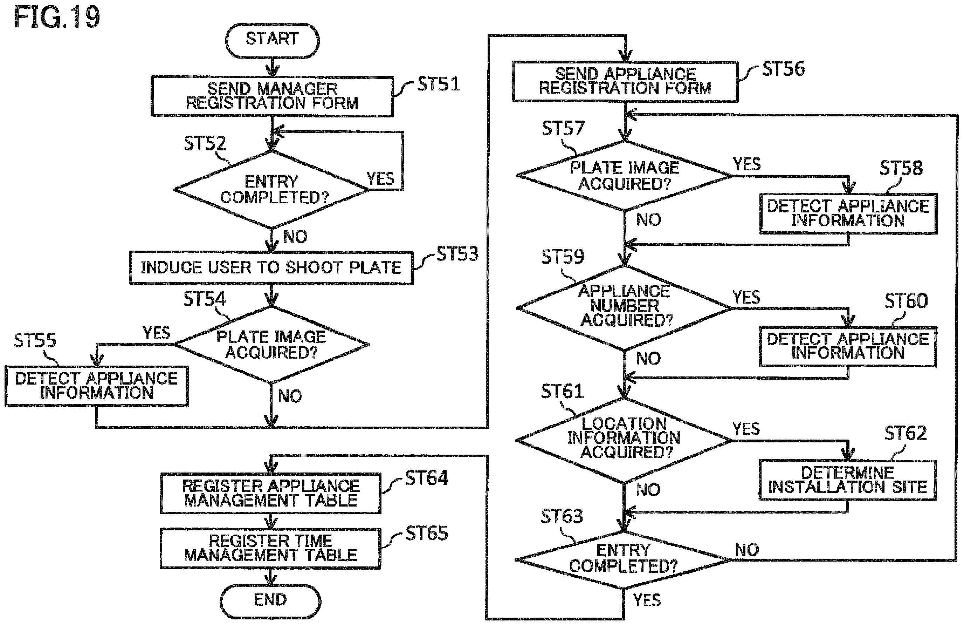

Referring to FIG. 19, an information registration process will be described below. First, the user (21) of the refrigeration apparatus (20) operates his or her information terminal (22) to send a request to send the forms (the manager registration form (81) and the appliance registration form (82)) to the information processing apparatus (10), so that his or her information (manager information) and information about his or her refrigeration apparatus (20) (appliance information and installation site information) are provided for (registered in) the information processing apparatus (10).

### «Step (ST51)»

Receiving the request to send the forms from the information terminal (22) of the user (21), the information processing unit (12) sends the manager registration form (81) to the information terminal (22) of the user (21). The information terminal (22) displays the manager registration form (81) sent from the information processing unit (12) to prompt the user (21) to enter the manager information, i.e., information about the manager (the user (21)) of the refrigeration apparatus (20). When the register button (81a) of the manager registration form (81) is selected, the information terminal (22) sends the entered management information to the information processing unit (12).

### «Step (ST52)»

Then, the information processing unit (12) determines whether the entry of the manager information to the manager registration form (81) has been completed or not. Specifically, the information processing unit (12) determines whether the manager information sent from the information terminal (22) of the user (21) contains all the necessary items (name of appliance manager and the e-mail address in this example). If the manager information sent from the information terminal (22) contains all the necessary items (i.e., the entry of the manager information to the manager registration form (81) has been completed), the process proceeds to Step (ST53).

If the manager information sent from the information terminal (22) does not contain all the necessary items (i.e., the entry of the manager information to the manager registration form (81) has not been completed), the information processing unit (12) notifies the information terminal (22) that the entry of the manager information to the manager registration form (81) has not been finished. Receiving such notification, the information terminal (22) displays that the manager information has not completely been entered to the manager registration form (81), thereby prompting the user (21) to enter the manager information.

### «Step (ST53)»

If the entry of the manager information to the manager registration form (81) has been completed, the information processing unit (12) sends image (or voice) data to the information terminal (22) of the user (21) to induce him or her to shoot a plate of the refrigeration apparatus (20). Receiving the image (or voice) data from the information processing unit (12), the information terminal (22) reproduces the image (or voice) data to prompt the user (21) to shoot the plate of the refrigeration apparatus (20). When the user (21) has shot the plate of the refrigeration apparatus (20) by operating the information terminal (22), the information terminal (22) sends the image of the plate of the refrigeration apparatus (20) thus shot to the information processing unit (12). Alternatively, if the user (21) does not intend to shoot the plate of the refrigeration apparatus (20), he or she operates the information terminal (22) to notify the information processing unit (12) of his or her intention.

### «Step (ST54)»

The information processing unit (12) determines whether the image of the plate of the refrigeration apparatus (20) has been acquired or not. Specifically, the information processing unit (12) determines whether the image of the plate of the refrigeration apparatus (20) sent from the information terminal (22) has been received or not. If the image of the plate of the refrigeration apparatus (20) sent from the information terminal (22) has been received (i.e., the image of the plate of the refrigeration apparatus (20) has been acquired), the process proceeds to Step (ST55). If not (e.g., the image of the plate of the refrigeration apparatus (20) was not received within a predetermined period following the reproduction of the image (or voice) data to induce the user to shoot the plate of the refrigeration apparatus (20), or the notification from the information terminal (22) that the user does not shoot the plate of the refrigeration apparatus (20) was received), the process proceeds to Step (ST56).

### «Step (ST55)»

If the image of the plate of the refrigeration apparatus (20) is acquired, the information processing unit (12) extracts the appliance number of the refrigeration apparatus (20) from the plate image. For example, the information processing unit (12) extracts the appliance number of the refrigeration apparatus (20) from the image of the plate of the refrigeration apparatus (20) through optical character recognition (OCR). Then, the information processing unit (12) detects, from the appliance information table (80), the appliance information corresponding to the appliance number extracted from the image of the plate of the refrigeration apparatus (20). Thus, the appliance information of the refrigeration apparatus (20) is acquired. Then, the information processing unit (12) inputs the plate image and appliance information of the refrigeration apparatus (20) to the appliance registration form (82).

### «Step (ST56)»

Then, the information processing unit (12) sends the appliance registration form (82) to the information terminal (22) of the user (21). The information terminal (22) displays the appliance registration form (82) sent from the information processing unit (12) to prompt the user (21) to enter the appliance information and installation site information of his or her refrigeration apparatus (20).

The image of the plate of the refrigeration apparatus (20) acquired through the shooting is arranged in the plate image display region (82a) of the appliance registration form (82). For example, if the plate image and appliance information of the refrigeration apparatus (20) have been acquired before the sending of the appliance registration form (82) (Step (ST55)), the plate image has been arranged in the plate image display region (82a) of the appliance registration form (82), and the appliance information has been entered into the appliance registration form (82).

If the reshoot button (82b) of the appliance registration form (82) is selected, the information terminal (22) reshoots the plate of the refrigeration apparatus (20) to obtain the plate image, and sends the plate image thus acquired to the information processing unit (12). Thus, the information processing unit (12) acquires the image of the plate of the refrigeration apparatus (20).

If the appliance number of the refrigeration apparatus (20) is entered in the appliance registration form (82) and the appliance information entry button (82c) of the appliance registration form (82) is selected, the information terminal (22) sends the appliance number entered in the appliance registration form (82) to the information processing unit (12). Thus, the information processing unit (12) acquires the appliance number of the refrigeration apparatus (20).

If the location information acquisition button (82d) of the appliance registration form (82) is selected, the information terminal (22) acquires location information of the current location (where the information terminal (22) is located) using the location information acquisition function (e.g., GPS), and sends the location information thus acquired to the information processing unit (12). Thus, the information processing unit (12) acquires the location information of the refrigeration apparatus (20). Note that the information terminal (22) may acquire the location information of the current location simultaneously with the shooting of the refrigeration apparatus (20).

If the cancel button (82e) of the appliance registration form (82) is selected, the information terminal (22) deletes (resets) the information items that have been entered in the appliance registration form (82). If the OK button (82f) of the appliance registration form (82) is selected, the information terminal (22) sends the appliance information and installation site information entered in the appliance registration form (82) to the information processing unit (12).

### «Steps (ST57, ST58)»

If the image of the plate of the refrigeration apparatus (20) has been acquired through the shooting of the plate of the refrigeration apparatus (20) (if YES is selected in Step (ST57)), the information processing unit (12) extracts the appliance number of the refrigeration apparatus (20) from the plate image of the refrigeration apparatus (20) thus acquired. Then, the information processing unit (12) detects, from the appliance information table (80), the appliance information corresponding to the appliance number extracted from the image of the plate of the refrigeration apparatus (20). Thus, the appliance information of the refrigeration apparatus (20) is acquired. Then, the information processing unit (12) sends the acquired appliance information of the refrigeration apparatus (20) to the information terminal (22) of the user (21). The information terminal (22) enters the appliance information of the refrigeration apparatus (20) sent from the information processing unit (12) to the appliance registration form (82).

### «Steps (ST59, ST60)»

If the appliance number of the refrigeration apparatus (20) is acquired through the entry of the appliance number of the refrigeration apparatus (20) into the appliance registration form (82) and the selection of the appliance information entry button (82c) of the appliance registration form (82) (if YES is selected in Step (ST59)), the information processing unit (12) detects the appliance information corresponding to the acquired appliance number of the refrigeration apparatus (20) from the appliance information table (80). Thus, the appliance information of the refrigeration apparatus (20) is acquired. Then, the information processing unit (12) sends the acquired appliance information of the refrigeration apparatus (20) to the information terminal (22) of the user (21). The information terminal (22) enters the appliance information of the refrigeration apparatus (20) sent from the information processing unit (12) to the appliance registration form (82).

«Steps (ST61, ST62)»

If the location information of the refrigeration apparatus (20) is acquired through the selection of the location information acquisition button (82d) of the appliance registration form (82) (if YES is selected in Step (ST61)), the information processing unit (12) sets the address indicated by the acquired location information of the refrigeration apparatus (20) as the address of the installation site of the refrigeration apparatus (20). Thus, the address of the installation site of the refrigeration apparatus (20) is determined. Then, the information processing unit (12) sends the determined address of the installation site of the refrigeration apparatus (20) to the information terminal (22) of the user (21). The information terminal (22) enters the address of the installation site of the refrigeration apparatus (20) sent from the information processing unit (12) into the appliance registration form (82).

### «Step (ST63)»

Then, the information processing unit (12) determines whether the entry of the appliance information and the installation site information to the appliance registration form (82) has been completed or not. Specifically, the information processing unit (12) determines whether all the necessary items are contained in the appliance information and the installation site information sent from the information terminal (22) of the user (21) through the selection of the OK button (82f) of the appliance registration form (82). If the appliance information and the installation site information sent from the information terminal (22) contain all the necessary items (i.e., the entry of the appliance information and the installation site information to the appliance registration form (82) has been completed), the process proceeds to Step (ST64).

If the appliance information and the installation site information sent from the information terminal (22) do not contain all the necessary items (i.e., the entry of the appliance information and the installation site information to the appliance registration form (82) has not been completed), the information processing unit (12) notifies the information terminal (22) that the appliance information and the installation site information have not completely been entered in the appliance registration form (82). Receiving the notification, the information terminal (22) displays that the appliance information and the installation site information have not completely been entered in the appliance registration form (82) to prompt the user (21) to enter the appliance information and the installation site information into the appliance registration form (82).

### «Step (ST64)»

If the appliance information and the installation site information have been completely entered into the appliance registration form (82), the information processing unit (12) registers, in the appliance management table (51), the target refrigeration apparatus (20) (specifically, the registration number of the refrigeration apparatus (20) given in the order of registration) in association with the manager information entered in the manager registration form (81) (the manager information of the refrigeration apparatus (20)), the appliance information and the installation site information entered in the appliance registration form (82) (the appliance information and installation site information of the refrigeration apparatus (20)), and the registration date (year, month, and date of the registration of these information items).

### «Step (ST65)»

Then, the information processing unit (12) determines whether the refrigeration apparatus (20) needs the regular inspection or not and the cycle of the regular inspection based on the appliance information of the refrigeration apparatus (20) registered in the appliance management table (51) (i.e., the appliance name and the motor rating included in the appliance information). In this example, if the appliance name included in the appliance information of the refrigeration apparatus (20) is that of an air conditioning appliance, and the motor rating is 7.5 kW or higher and less than 50 kW, the information processing unit (12) determines that the refrigeration apparatus (20) needs the regular inspection and the cycle of the regular inspection is "three years." If the appliance name included in the appliance information of the refrigeration apparatus (20) is that of an air conditioning appliance and the motor rating is 50 kW or higher, or if the appliance name included in the appliance information of the refrigeration apparatus (20) is that of a refrigeration/cold storage appliance and the motor rating is 7.5 kW or higher, the information processing unit (12) determines that the refrigeration apparatus (20) needs the regular inspection and the cycle of the regular inspection is "one year."

Further, the information processing unit (12) determines whether the refrigeration apparatus (20) needs the simple inspection or not and the cycle of the simple inspection based on the appliance information of the refrigeration apparatus (20) registered in the appliance management table (51) (i.e., the appliance name included in the appliance information). In this example, if the appliance name included in the appliance information of the refrigeration apparatus (20) is that of a Class-I specified product, the information processing unit (12) determines that the refrigeration apparatus (20) needs the simple inspection and the cycle of the simple inspection is "three months."

Then, based on the registration date of the refrigeration apparatus (20) registered in the appliance management table (51), the information processing unit (12) determines the recommended time for the regular inspection, time to notify of the regular inspection, recommended time for the simple inspection, and time to notify of the simple inspection of the refrigeration apparatus (20), and registers these information items in the time management table (54) in association with the refrigeration apparatus (20). In this example, the information processing unit (12) determines the recommended time for the regular inspection to be one month, the end of which is an expiration date of three years (the cycle of the regular inspection) starting from the day following the registration date of the refrigeration apparatus (20), and determines the start date of the recommended time for the regular inspection to be the time to notify of the regular inspection. The information processing unit (12) also determines the recommended time for the simple inspection to be one month, the end of which is an expiration date of three months (the cycle of the simple inspection) starting from the day following the registration date of the refrigeration apparatus (20), and determines the start date of the recommended time for the simple inspection to be the time to notify of the simple inspection.

### (Confirmation of Simple Inspection Status)

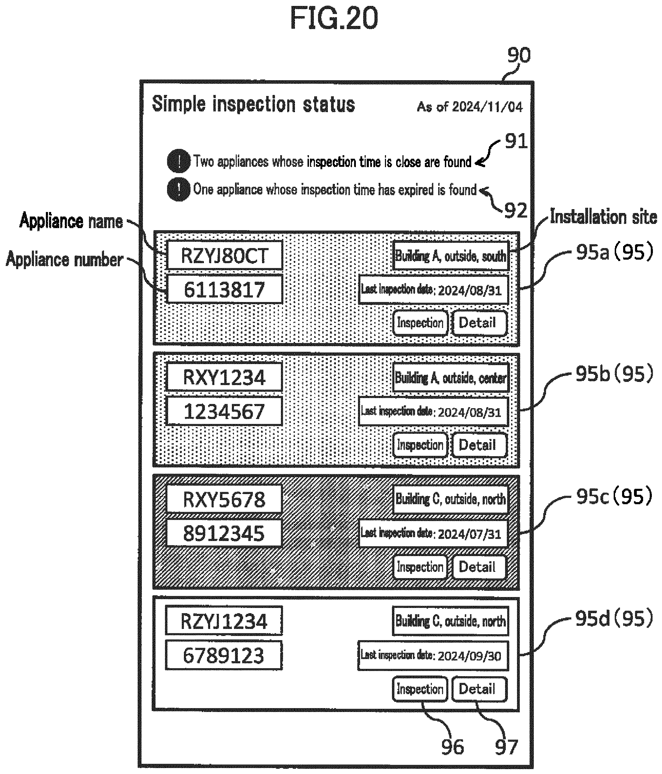

The information processing unit (12) of the information processing apparatus (10) may perform a process of allowing the user (21) to confirm the status of the simple inspection of the refrigeration apparatus (20) (simple inspection status confirmation process). In the simple inspection status confirmation process, a simple inspection status confirmation sheet (90) as shown in FIG. 20 is sent to the information terminal of the inspector in charge of the simple inspection (the information terminal (22) of the user (21)). In this example, the information storage unit (11) stores a simple inspection status confirmation sheet (specifically, a template of the simple inspection status confirmation sheet (90)).

<Simple Inspection Status Confirmation Sheet>

As shown in FIG. 20, the simple inspection status confirmation sheet (90) indicates the status of the simple inspection of at least one refrigeration apparatus (20) owned by the user (21). Specifically, the simple inspection status confirmation sheet (90) includes at least one appliance display region (95) (four appliance display regions (95a, 95b, 95c, and 95d) in this example). In the appliance display region (95), the date of the last simple inspection of the refrigeration apparatus (20) (last inspection date), the appliance information (the appliance name and the appliance number in this example), and the installation site information (system name and installation site in this example) are registered.

Further, in this example, the appliance display region (95) includes an inspection button (96) which is operated to display a simple inspection check sheet of the refrigeration apparatus (20) (the simple inspection check sheet (62) as shown in FIG. 14 in which the result of the last simple inspection is registered), and a detail button (97) which is operated to display details of the appliance information of the refrigeration apparatus (20) (e.g., the refrigerant type and the motor rating). In the simple inspection status confirmation sheet (90), a first alert message (91) which notifies of the number of the refrigeration apparatuses (20) whose predetermined due date of the simple inspection is close, and a second alert message (92) which notifies of the number of the refrigeration apparatuses (20) whose predetermined due date of the simple inspection has expired are registered.

### <Simple Inspection Status Confirmation Process>

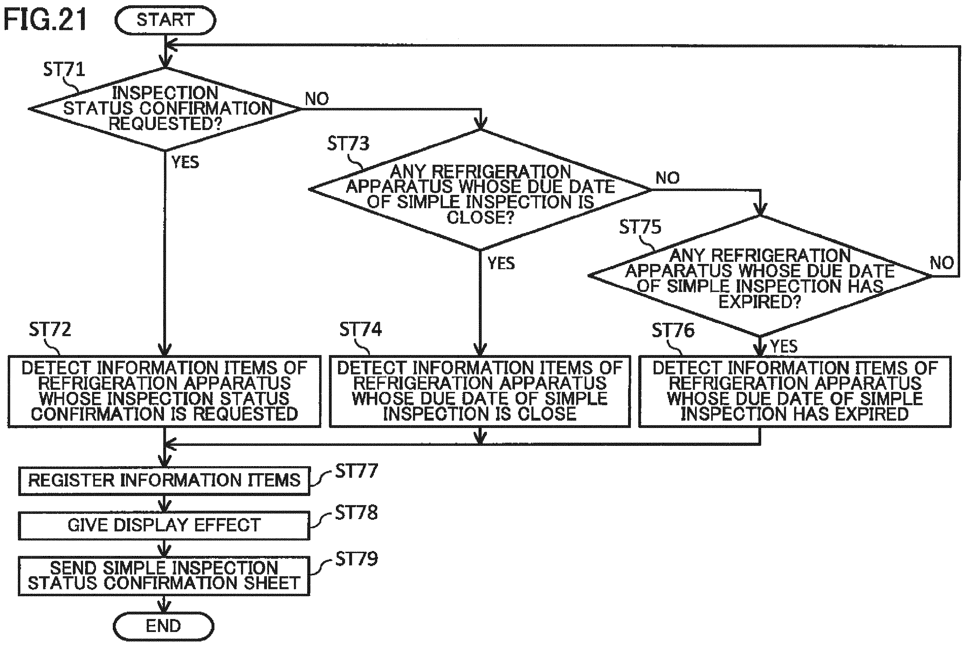

The simple inspection status confirmation process will be described with reference to FIG. 21. The user (21), who is the inspector in charge of the simple inspection of the refrigeration apparatus (20), operates his or her information terminal (22) to send a request to send the simple inspection status confirmation sheet (90) to the information processing apparatus (10) when he or she wants to confirm the status of the simple inspection of the user's refrigeration apparatus (20).

### «Step (ST71)»

The information processing unit (12) determines whether the request to send the simple inspection status confirmation sheet (90) has been received from the information terminal (22) of the user (21). If the request to send the simple inspection status confirmation sheet (90) has been received, the process proceeds to Step (ST72). If not, the process proceeds to Step (ST73).

### «Step (ST72)»

Then, referring to the simple inspection management table (72) and the appliance management table (51), the information processing unit (12) detects the date of the last simple inspection, appliance information (appliance name and appliance number in this example), and installation site information (system name and installation site in this example) of at least one refrigeration apparatus (20) associated with the information terminal (the information terminal (22) of the user (21)) which has sent the request to send the simple inspection status confirmation sheet (90), i.e., the at least one refrigeration apparatus (20) of which the simple inspection status confirmation is requested. Specifically, the information processing unit (12) detects the date of the last simple inspection of the refrigeration apparatus (20) from the simple inspection management table (72), and detects the appliance information and installation site information of the refrigeration apparatus (20) from the appliance management table (51), the refrigeration apparatus (20) being associated with the information terminal (22) which has sent the request to send the simple inspection status confirmation sheet (90). Then, the process proceeds to Step (ST77).

### «Step (ST73)»

If the request to send the simple inspection status confirmation sheet (90) has not been received, the information processing unit (12) refers to the time management table (54) to determine whether there is a refrigeration apparatus (20) for which a period left until the predetermined due date of the simple inspection (the expiration date of the recommended time for the simple inspection in this example) is shorter than the predetermined period (one month in this example). Specifically, the information processing unit (12) determines whether there is a refrigeration apparatus (20) whose due date of the simple inspection is close. If there is a refrigeration apparatus (20) whose due date of the simple inspection is close, the process proceeds to Step (ST74). If not, the process proceeds to Step (ST75).

### «Step (ST74)»

Then, referring to the inspector-in-charge management table (53), the simple inspection management table (72), and the appliance management table (51), the information processing unit (12) detects the date of the last simple inspection, appliance information (appliance name and appliance number in this example), and installation site information (system name and installation site in this example) of each of the refrigeration apparatus (20) whose due date of the simple inspection is close, and the refrigeration apparatus (20) associated with the same inspector in charge of the simple inspection as the inspector of the former refrigeration apparatus (20) (the user (21)). Specifically, the information processing unit (12) detects, from the inspector-in-charge management table (53), at least one refrigeration apparatus (20) associated with the same inspector (the user (21)) in charge of the simple inspection of the refrigeration apparatus (20) whose due date of the simple inspection is close. Then, the information processing unit (12) detects, from the simple inspection management table (72) and the appliance management table (51), the date of the last simple inspection, the appliance information, and the installation site information associated with the at least one refrigeration apparatus (20). Then, the process proceeds to Step (ST77).

### «Step (ST75)»

If there is no refrigeration apparatus (20) whose due date of the simple inspection is close, the information processing unit (12) refers to the time management table (54) to determine whether there is a refrigeration apparatus (20) whose predetermined due date of the simple inspection (the expiration date of the recommended time for the simple inspection in this example) has expired. If there is a refrigeration apparatus (20) whose due date of the simple inspection has expired, the process proceeds to Step (ST76). If not, the process proceeds to Step (ST71).

### «Step (ST76)»

Then, referring to the inspector-in-charge management table (53), the simple inspection management table (72), and the appliance management table (51), the information processing unit (12) detects the date of the last simple inspection, appliance information, and installation site information of each of the refrigeration apparatus (20) whose due date of the simple inspection has expired and the refrigeration apparatus (20) associated with the inspector in charge of the simple inspection of the former refrigeration apparatus (20) (the user (21)). In this example, the appliance information includes the appliance name and the appliance number, and the installation site information includes the system name and the installation site. Specifically, the information processing unit (12) detects, from the inspector-in-charge management table (53), at least one refrigeration apparatus (20) associated with the inspector (user (21)) in charge of the simple inspection of the refrigeration apparatus (20) whose due date of the simple inspection has expired. Then, the information processing unit (12) detects, from the simple inspection management table (72) and the appliance management table (51), the date of the last simple inspection, appliance information, and installation site information of the at least one refrigeration apparatus (20). Then, the process proceeds to Step (ST77).

### «Step (ST77)»

Then, the information processing unit (12) registers, in the appliance display region (95) of the simple inspection status confirmation sheet (90), the date of the last simple inspection, appliance information, and installation site information of the refrigeration apparatus (20) detected from the simple inspection management table (72) and the appliance management table (51) in Step (ST72) or Step (ST74, ST76), in association with each other. Specifically, the information processing unit (12) registers the date of the last simple inspection, the appliance information, and the installation site information, which are associated with the single refrigeration apparatus (20), in the single appliance display region of the simple inspection status confirmation sheet (90).

### «Step (ST78)»

Then, the information processing unit (12) gives a first display effect to the appliance display region (95) which is provided in the simple inspection status confirmation sheet (90) processed in Step (ST77) and corresponds to the refrigeration apparatus whose due date of the simple inspection is close (the refrigeration apparatus (20) for which a period left until the expiration date of the recommended time for the simple inspection is shorter than one month). Further, the information processing unit (12) gives a second display effect to the appliance display region (95) corresponding to the refrigeration apparatus (20) whose due date of the simple inspection (the expiration date of the recommended time for the simple inspection in this example) has expired.

In this example, as shown in FIG. 20, the information processing unit (12) highlights part or all (of the background in this example) of the appliance display regions (95a, 95b) corresponding to the refrigeration apparatuses (20) whose due date of the simple inspection is close in a first alert color (e.g., yellow) as the first display effect, and highlights part of all (of the background in this example) of the appliance display region (95c) corresponding to the refrigeration apparatus (20) whose due date of the simple inspection has expired in a second alert color (e.g., red) as the second display effect. Note that neither of the first and second display effects is given to the appliance display region (95d) corresponding to the refrigeration apparatus (20) whose due date of the simple inspection is not close and has not expired.

Further, in this example, the information processing unit (12) registers the first and second alert messages (91, 92) in the simple inspection status confirmation sheet (90). The first alert message (91) notifies that there are two refrigeration apparatuses (20) whose due date of the simple inspection is close. The second alert message (92) notifies that there is a single refrigeration apparatus (20) whose due date of the simple inspection has expired.

### «Step (ST79)»

Referring to the inspector-in-charge management table (53), the information processing unit (12) sends the simple inspection status confirmation sheet (90) processed in Steps (ST77, ST78) to the information terminal of the inspector in charge of the simple inspection corresponding to the simple inspection status confirmation sheet (90) (the information terminal (22) of the user (21)). Specifically, the information processing unit (12) detects, from the inspector-in-charge management table (53), the identification number of the information terminal which is handled by the inspector in charge of the simple inspection and associated with the refrigeration apparatus (20) corresponding to the information items registered in the simple inspection status confirmation sheet (90), and sends the simple inspection status confirmation sheet (90) to the information terminal having the detected identification number (the information terminal (22) of the user (21)).

Receiving the simple inspection status confirmation sheet (90) from the information processing unit (12), the information terminal of the inspector in charge of the simple inspection of the refrigeration apparatus (20) (the information terminal (22) of the user (21)) displays the simple inspection status confirmation sheet (90) to prompt the inspector in charge of the simple inspection (the user (21)) to confirm the status of the simple inspection of the refrigeration apparatus (20).

### (Other Embodiments)

It has been described in the above embodiments that the information processing unit (12) sends the regular inspection check sheet (61), in which the regular inspection information of the refrigeration apparatus (20) has been registered, to the information terminal of the inspector in charge of the regular inspection (the information terminal (22) of the user (21) or the information terminal (32) of the shop (30)). Alternatively, the information processing unit (12) may directly send the regular inspection information of the refrigeration apparatus (20) to the information terminal of the inspector in charge of the regular inspection of the refrigeration apparatus (20) without registering the regular inspection information of the refrigeration apparatus (20) in the regular inspection check sheet (61).

It has been described that the refrigeration apparatus (20) is a Class-I specified product which is subject to the simple and regular inspections under the CFC Emission Control Act. Alternatively, the refrigeration apparatus (20) may be the one which is subject to a simple inspection (by a user) and a regular inspection (by a qualified person) under a criterion different from the CFC Emission Control Act.

The above-described embodiments and variations may be combined as appropriate. The embodiments and variations described above are merely exemplary ones in nature, and do not intend to limit the scope of the present disclosure or applications or use thereof.

### INDUSTRIAL APPLICABILITY

As can be seen in the foregoing, the information processing apparatus described above is useful for assisting an inspection of a refrigeration apparatus.

### DESCRIPTION OF REFERENCE CHARACTERS

- 10: Information Processing Apparatus
- 11: Information Storage Unit
- 12: Information Processing Unit
- 20: Refrigeration Apparatus
- 21: User
- 22: Information Terminal
- 23: Monitor
- 30: Shop
- 31: Inspector
- 32: Information Terminal
- 40: Telecommunications Network
- 51: Appliance Management Table
- 52: Operation Condition Management Table
- 53: Inspector-In-Charge Management Table
- 54: Time Management Table
- 61: Regular Inspection Check Sheet
- 62: Simple Inspection Check Sheet
- 71: Regular Inspection Management Table
- 72: Simple Inspection Management Table

## Claims

1. An information processing apparatus connected, via a telecommunications network (40), to an information terminal (22) handled by a user (21) of a refrigeration apparatus (20) subject to a regular inspection by a qualified person, and an information terminal (32) handled by an employee of a shop (30) having an inspector (31) as the qualified person and being capable of offering regular inspection service of the refrigeration apparatus (20), the information processing apparatus comprising:
an information storage unit (11) which stores the refrigeration apparatus (20) in association with operation condition information about operation conditions of the refrigeration apparatus (20), and the information terminal (22) of the user (21), or the information terminal (32) of the shop (30), the user (21) or the shop (30) being in charge of the regular inspection of the refrigeration apparatus (20); and
an information processing unit (12) which generates regular inspection information to be used for the regular inspection of the refrigeration apparatus (20) based on the operation condition information associated with the refrigeration apparatus (20) in the information storage unit (11), the regular inspection information including items related to the operation conditions of the refrigeration apparatus (20), and sends the regular inspection information to the information terminal (22) of the user (21) or the information terminal (32) of the shop (30), the user (21) or the shop (30) being in charge of the regular inspection of the refrigeration apparatus (20), and the user's information terminal (22) or the shop's information terminal (32) being associated with the refrigeration apparatus (20) in the information storage unit (11).

2. The information processing apparatus of claim 1, wherein
receiving a request to send the regular inspection information from the information terminal (22) of the user (21) or the information terminal (32) of the shop (30), the information processing unit (12) sends, to the information terminal (22, 32), the regular inspection information which has been generated based on the operation condition information of the refrigeration apparatus (20) associated with the information terminal (22, 32) in the information storage unit (11).

3. The information processing apparatus of claim 1 or 2, wherein
when time to notify of the regular inspection, which is predetermined for the refrigeration apparatus (20), has come, the information processing unit (12) sends the regular inspection information, which has been generated based on the operation condition information associated with the refrigeration apparatus (20) in the information storage unit (11), to the information terminal (22) of the user (21) or the information terminal (32) of the shop (30), the user (21) or the shop (30) being in charge of the regular inspection of the refrigeration apparatus (20), and the user's information terminal (22) or the shop's information terminal (32) being associated with the refrigeration apparatus (20) in the information storage unit (11).

4. The information processing apparatus of any one of claims 1 to 3, wherein
the information processing unit (12) generates the regular inspection information based on the operation condition information which is associated with the refrigeration apparatus (20) in the information storage unit (11) and obtained in a high-load period of year in which the refrigeration apparatus (20) is presumably under a relatively high load.

5. The information processing apparatus of any one of claims 1 to 4, wherein
in addition to the sending of the regular inspection information about the refrigeration apparatus (20), the information processing unit (12) notifies the information terminal (22) of the user (21) or the information terminal (32) of the shop (30) of recommended time for the regular inspection, which is time when the regular inspection of the refrigeration apparatus (20) is recommended and predetermined for the refrigeration apparatus (20), the user (21) or the shop (30) being in charge of the regular inspection of the refrigeration apparatus (20), and the user's information terminal (22) or the shop's information terminal (32) being associated with the refrigeration apparatus (20) in the information storage unit (11).

6. The information processing apparatus of claim 5, wherein
the recommended time for the regular inspection is determined based on a status of use of the refrigeration apparatus (20).

7. The information processing apparatus of any one of claims 1 to 6, wherein the refrigeration apparatus (20) is subject to the regular inspection and a simple inspection by the user (21),
the information storage unit (11) stores, in association with the refrigeration apparatus (20), the information terminal (22) of the user (21) in charge of the simple inspection of the refrigeration apparatus (20), and
when time to notify of the simple inspection, which is predetermined for the refrigeration apparatus (20), has come, the information processing unit (12) notifies the information terminal (22) of recommended time for the simple inspection, which is time when the simple inspection of the refrigeration apparatus (20) is recommended and predetermined for the refrigeration apparatus (20), the information terminal (22) being handled by the user (21) in charge of the simple inspection of the refrigeration apparatus (20) and associated with the refrigeration apparatus (20) in the information storage unit (11).

8. The information processing apparatus of claim 7, wherein
in addition to the notification of the recommended time for the simple inspection of the refrigeration apparatus (20), the information processing unit (12) notifies the information terminal (22) of the recommended time for the regular inspection, which is time when the regular inspection of the refrigeration apparatus (20) is recommended and predetermined for the refrigeration apparatus (20), the information terminal (22) being handled by the user (21) in charge of the simple inspection of the refrigeration apparatus (20) and associated with the refrigeration apparatus (20) in the information storage unit (11).

9. The information processing apparatus of claim 7 or 8, wherein
in addition to the notification of the recommended time for the simple inspection of the refrigeration apparatus (20), the information processing unit (12) sends a simple inspection check sheet to be used for the simple inspection of the refrigeration apparatus (20) to the information terminal (22) which is handled by the user (21) in charge of the simple inspection of the refrigeration apparatus (20) and associated with the refrigeration apparatus (20) in the information storage unit (11).
